# EUROPÄISCHE PATENTSCHRIFT

(11) **EP 2 494 784 B1**
(45) Veröffentlichungstag und Bekanntmachung des Hinweises auf die Patenterteilung: **21.01.2015**
(21) Anmeldenummer: 10779489.3
(22) Anmeldetag: 26.10.2010
(51) Int. Cl.: H04N 9/31

(54) **VERFAHREN UND VORRICHTUNG ZUM ERZEUGEN EINER KALIBRIERTEN PROJEKTION**
METHOD AND DEVICE FOR GENERATING A CALIBRATED PROJECTION
PROCÉDÉ ET DISPOSITIF DE PRODUCTION D'UNE PROJECTION ÉTALONNÉE

(30) Priorität: 28.10.2009 DE 102009046114
(43) Veröffentlichungstag der Anmeldung: 05.09.2012
(73) Patentinhaber: Fraunhofer-Gesellschaft zur Förderung der angewandten Forschung e.V., 80686 München (DE)
(72) Erfinder: KLOSE, Stefan, 15732 Schulzendorf (DE)
(74) Vertreter: Staroske, Sandro
(86) Internationale Anmeldenummer: PCT/EP2010/066155
(87) Internationale Veröffentlichungsnummer: WO 2011/051281

(56) Entgegenhaltungen:
- WO-A2-2007/149323
- DE-A1-102006 002 602
- US-A1- 2004 184 011
- FRÃ CR DÃ CR RIC COURTEILLE ET AL: "Shape from Contour for the Digitization of Curved Documents", 18. November 2007 (2007-11-18), COMPUTER VISION Â ACCV 2007; [LECTURE NOTES IN COMPUTER SCIENCE], SPRINGER BERLIN HEIDELBERG, BERLIN, HEIDELBERG, PAGE(S) 196 - 205, XP019082464, ISBN: 978-3-540-76389-5 das ganze Dokument
- TADDEI P ET AL: "Template-based paper reconstruction from a single image is well posed when the rulings are parallel", COMPUTER VISION AND PATTERN RECOGNITION WORKSHOPS, 2008. CVPR WORKSHOPS 2008. IEEE COMPUTER SOCIETY CONFERENCE ON, IEEE, PISCATAWAY, NJ, USA, 23. Juni 2008 (2008-06-23), Seiten 1-6, XP031285638, ISBN: 978-1-4244-2339-2

## Beschreibung

Die Erfindung betrifft Verfahren zum Erzeugen einer kalibrierten Projektion gemäß den Ansprüchen 1 und 12 sowie Vorrichtungen zum Erzeugen einer kalibrierten Projektion gemäß den Ansprüchen 14 und 15.

Die Verwendung von Projektionssystemen zum Projizieren eines Bildes auf eine Projektionsfläche ist in vielen Bereichen von Industrie, Forschung und Lehre üblich. Hierbei erfolgt die Projektion des Bildes typischerweise auf eine plane Projektionsfläche, z. B. eine Leinwand oder eine Außen- oder Innenwand eines Gebäudes. Aus dem Stand der Technik ist auch bekannt, mehrere Projektoren zu verwenden, mit denen jeweils Teilbilder eines Gesamtbildes projiziert werden. Ein derartiges Multiprojektorsystem ist z. B. in der DE 102 51 217 B3 beschrieben.

Multiprojektorsysteme werden zudem auch aus Redundanzgründen, zur Erhöhung der Lichtstärke oder zur Erhöhung der Auflösung eingesetzt. Beispielsweise liegen Anwendungen derartiger Projektorsysteme im Bereich der Architektur und/oder generell im Bereich des CADs, um insbesondere auch Details und/oder auch große Modelle darstellen zu können. Die Projektoren eines Multiprojektorsystems müssen jedoch so zueinander und/oder relativ zur Projektionsfläche ausgerichtet ("kalibriert") werden, dass ein möglichst verzerrungsfreies, einem Betrachter korrekt erscheinendes Bild erzeugt wird. Insbesondere werden die projizierten Teilbilder der verschiedenen Projektoren pixelgenau aneinander und/oder an die Projektionsfläche angepasst ("Stitching" bzw. "Warping"). Des Weiteren kann die Helligkeit der Teilbilder in einem Überlappungsbereich mit einem benachbarten Teilbild reduziert werden, um zu vermeiden, dass das Gesamtbild in solchen Überlappungsbereichen eine größere Helligkeit aufweist.

Das der Erfindung zugrunde liegende Problem besteht darin, Verfahren und Vorrichtungen bereitzustellen, das eine möglichst verzerrungsfreie Projektion auch auf eine Projektionsfläche ermöglicht, die sich nicht plan entlang einer einzigen Ebene erstreckt.

Dieses Problem wird durch ein Verfahren mit den Merkmalen des Anspruchs 1 oder 12 sowie durch eine Vorrichtung mit den Merkmalen des Anspruchs 14 oder 15 gelöst. Weiterbildungen der Erfindung sind in den abhängigen Ansprüchen angegeben.

Danach wird ein Verfahren zum Erzeugen einer kalibrierten Projektion auf einer Projektionsfläche zur Verfügung gestellt, das die Schritte aufweist:
a) Anordnen und/oder Erzeugen einer dem räumlichen Verlauf der Projektionsfläche folgenden Kalibrierstruktur, die eine erste Seite und eine zweite Seite, die parallel zu der ersten Seite verläuft, und eine gemessen in Richtung der ersten oder der zweiten Seite konstante Höhe aufweist,
b) Erzeugen eines Abbildes der Kalibrierstruktur in einer Bildebene mittels einer Kamera;
c) Rekonstruktion des räumlichen Verlaufes der Projektionsfläche im Bereich der Kalibrierstruktur, umfassend die Schritte:
d) Bestimmen mehrerer Paare von Punkten des Abbildes der Kalibrierstruktur, die jeweils einen ersten und einen zweiten Punkt des Abbildes der Kalibrierstruktur aufweisen, wobei der erste und der zweite Punkt jeweils einem ersten und einem zweiten Punkt der tatsächlichen Kalibrierstruktur entsprechen, die sich entlang der ersten oder der zweiten Seite der Kalibrierstruktur gegenüberliegen;
e) Erzeugen mehrerer Hilfsstrahlpaare, die jeweils zwei Hilfsstrahlen aufweisen, die von dem ersten und dem zweiten Punkt der Punktepaare zu einem gedachten Fluchtpunkt vor der Bildebene verlaufen;
f) Erzeugen mehrerer zueinander paralleler Stützstrecken, die jeweils auf einem der Hilfsstrahlen eines der Hilfsstrahlpaare beginnen und auf dem jeweils anderen Hilfsstrahl eines der Hilfsstrahlpaare enden;
g) Verändern der Länge und/oder der Orientierung der Stützstrecken, bis sämtliche Stützstrecken die gleiche Länge aufweisen und jeweils unter dem gleichen Winkel auf eine gemeinsame Ebene aufsetzen;
h) Erzeugen eines (virtuellen) Modells der Projektionsfläche unter Verwendung der gemäß Schritt g) gefundenen Stützstrecken, wobei diese Stützstrecken Streckenabschnitte der gesuchten Projektionsfläche sind, die parallel zu der ersten und zweiten Seite der Kalibrierstruktur verlaufen;
i) Erzeugen einer insbesondere in Bezug auf die Kalibrierstruktur kalibrierten Projektion unter Verwendung des gemäß dem Schritt h) erzeugten Modells, d.h. des rekonstruierten räumlichen Verlaufes der Projektionsfläche.

Dieses Verfahren ermöglicht eine in Bezug auf den sich im Bereich der Kalibrierstruktur erstreckenden Abschnitt der Projektionsfläche kalibrierte, d. h. insbesondere verzerrungsfreie, Projektion, auch wenn dieser Abschnitt der Projektionsfläche nicht durchgehend plan entlang einer einzigen Ebene verläuft, sondern der z. B. eine Krümmung (oder mehrere Krümmungen) und/oder einen Knick (oder mehrere Knicke) aufweist.

Um eine derartig kalibrierte Projektion erzeugen zu können, wird der räumliche Verlauf der Projektionsfläche unter Verwendung der Kalibrierstruktur ermittelt, wobei das Verfahren davon ausgeht, dass die Projektionsfläche im Bereich der Kalibrierstruktur in bestimmter Art und Weise gestaltet ist, nämlich derart, dass sie durch eine Fläche angenähert werden kann, die durch Verschieben einer Verbindungslinie, die zwischen einem Ende der ersten und einem Ende der zweiten Seite der Kalibrierstruktur verläuft, entlang der ersten und der zweiten Seite der Kalibrierstruktur erzeugt wird. Die "Verbindungslinie" ist eine im Prinzip beliebig gestaltete Raumkurve, d. h., sie muss nicht unbedingt geradlinig verlaufen, sondern kann z. B. eine Krümmung (oder mehrere Krümmungen) und/oder einen Knick (oder mehrere Knicke) aufweisen. Das Verfahren umfasst insbesondere auch das Bereitstellen einer entsprechend gestalteten Projektionsfläche.

Insbesondere verbindet die Verbindungslinie zwei Enden der ersten und der zweiten Seite der Kalibrierstruktur, die sich in einer Richtung senkrecht zu der ersten oder der zweiten Seite der Kalibrierstruktur gegenüberliegen, d.h. die beiden "unteren" oder die beiden "oberen" Enden der ersten und der zweiten Seite. Die Verbindungslinie wird dann entlang der ersten und der zweiten Seite, d. h. nach oben bzw. nach unten, verschoben, wobei die Verbindungslinie beim Verschieben eine Fläche überstreicht, entlang derer sich die Projektionsfläche erstreckt. Mit anderen Worten wird die Projektionsfläche im Bereich der Kalibrierstruktur durch einen (z. B. vertikalen) "Sweep" in einer Richtung entlang der ersten und der zweiten Seite der Kalibrierstruktur erzeugt. Diese Eigenschaft der Projektionsfläche bedeutet anders ausgedrückt insbesondere, dass sie im Bereich der Kalibrierstruktur zwar entlang einer Linie abgeknickt und/oder abgekrümmt ist, die parallel zur ersten und zur zweiten Seite der Kalibrierstruktur verläuft, im Wesentlichen jedoch keine oder nur im Vergleich zur übrigen von der Kalibrierstruktur begrenzten Fläche kleine Aufwölbungen oder Vertiefungen aufweist. Es ist allerdings möglich, dass, wenn die Projektionsfläche derartige kleine Vertiefungen oder Aufwölbungen aufweist, durch diese hervorgerufene Verzerrungen über die Projektion eines Kalibriermusters korrigiert werden können. Die Korrektur von Verzerrungen wird weiter unten diskutiert.

Die Projektionsfläche einschließlich der Kalibrierstruktur wird mittels eines Aufnahmemittels (Kamera), insbesondere einer Digitalkamera, Videokamera oder Highspeedkamera, fotografiert, d. h., es wird ein Abbild der Kalibrierstruktur in einer Bildebene der Kamera erzeugt. Ausgehend von diesem Abbild der Kalibrierstruktur erfolgt dann die Rekonstruktion des räumlichen Verlaufes der Projektionsfläche im Bereich der Kalibrierstruktur, wobei die Voraussetzung, dass die Projektionsfläche im Bereich der Kalibrierstruktur durch einen "Sweep" einer Verbindungslinie entlang der ersten oder zweiten Seite der Kalibrierstruktur erzeugt wird, ausgenutzt wird.

Das Rekonstruktionsverfahren umfasst das Bestimmen von Punktepaaren des Abbildes der Kalibrierstruktur, deren Punkte jeweils Punkten der tatsächlichen, d. h. der auf der Projektionsfläche vorhandenen, Kalibrierstruktur entsprechen. Beispielsweise weist die tatsächliche Kalibrierstruktur vier Ecken auf (d.h. sie ist ein "räumliches Viereck"), wobei sich jeweils zwei Eckpunkte der viereckigen Kalibrierstruktur entlang ihrer ersten Seite bzw. entlang ihrer zweiten Seite einander gegenüber liegen. Diese Eckpunkte können in dem Abbild der Kalibrierstruktur identifiziert werden, auch wenn dieses Abbild abhängig z. B. von der Orientierung der Kamera relativ zu der Projektionsfläche verzerrt und/oder verdreht ist.

Ausgehend z. B. von Eckpunkten des Vierecks (d. h. der tatsächlichen Kalibrierstruktur) können dann z. B. weitere Punktepaare im Abbild der Kalibrierstruktur Punktepaaren der tatsächlichen Kalibrierstruktur zugeordnet werden, z. B. indem Punktepaare in dem Abbild identifiziert werden, deren Punkte jeweils auf einer ersten Verbindungslinie (d. h. einer dritten Seite der Kalibrierstruktur) zwischen einem Eckpunkt der ersten Seite und einem Eckpunkt der zweiten Seite und auf einer zweiten Verbindungslinie (einer vierten Seite der Kalibrierstruktur) zwischen dem zweiten Eckpunkt der ersten Seite und dem zweiten Eckpunkt der zweiten Seite liegen und die jeweils einen identischen Abstand zur ersten und zur zweiten Seite der Kalibrierstruktur aufweisen. Ein Verfahren, derartige weitere Punktepaare im Abbild der Kalibrierstruktur zu identifizieren, wird weiter unten beschrieben. Es wird darauf hingewiesen, dass die Kalibrierstruktur nicht notwendigerweise vier Ecken aufweisen muss. Andere Geometrien der Kalibrierstruktur sind ebenfalls denkbar, z.B. eine Struktur, die - projiziert in eine Ebene, in der sich die erste und die zweite Seite der Kalibrierstruktur erstrecken - mehr als vier Ecken aufweist.

Zu jedem Punkt der bestimmten Punktepaare wird anschließend ein (virtueller) Hilfsstrahl erzeugt (insbesondere unter Verwendung eines Computerprogramms), der jeweils von dem ersten und dem zweiten Punkt der Punktepaare zu einem gemeinsamen Fluchtpunkt vor der Bildebene der Kamera (oder allgemein vor einer Ebene, in der sich das Abbild der Kalibrierstruktur erstreckt) verläuft, d. h., es erfolgt gewissermaßen eine Modellierung des Abbildens der Kalibrierstruktur durch die Kamera unter Verwendung eines Lochkameramodells.

Zur Rekonstruktion der Projektionsfläche wird die Projektionsfläche, wie oben beschrieben, als durch einen "Sweep" entlang der ersten und der zweiten Seite der Kalibrierstruktur erzeugt betrachtet, so dass sich die Projektionsfläche in diesem Bereich durch eine Anordnung einer Vielzahl von zueinander parallelen, im Raum angeordneten (geraden) Strecken mit einer Länge, die der Höhe der Kalibrierstruktur entspricht, zusammensetzen lässt. Entsprechend werden mehrere zueinander parallele Stützstrecken erzeugt (insbesondere per Computerprogramm), die jeweils auf einem der Hilfsstrahlen eines der Hilfsstrahlpaare beginnen und auf dem jeweils anderen Hilfsstrahl eines der Hilfsstrahlpaare enden.

Diese Stützstrecken werden dann hinsichtlich ihrer Länge und/oder ihrer Orientierung solange verändert (insbesondere unter Verwendung eines rechnergestützten Optimierungsalgorithmus), bis alle Stützstrecken die gleiche Länge aufweisen und unter dem gleichen Winkel auf eine gemeinsame Ebene aufsetzen, d.h. auf jeweils auf dieser Ebene enden. Die so gefundenen Stützstrecken bilden dann Streckenabschnitte der gesuchten Rekonstruktion der Projektionsfläche im Bereich der Kalibrierstruktur, die jeweils parallel zu der ersten und der zweiten Seite der Kalibrierstruktur verlaufen, und deren Enden jeweils Punkten einer ersten Verbindungslinie zwischen der ersten und der zweiten Seite der Kalibrierstruktur (d.h. einer dritten Seite der Kalibrierstruktur) und Punkten einer zweiten Verbindungslinie zwischen der ersten und der zweiten Seite der Kalibrierstruktur (d.h. einer vierten Seite der Kalibrierstruktur) entsprechen.

Unter Verwendung der so rekonstruierten Projektionsfläche wird dann ein in Bezug auf die Kalibrierstruktur kalibriertes Projektionsbild erzeugt, wobei dieses kalibrierte Projektionsbild natürlich auch unter Verwendung mehrerer Projektoren, d. h., durch Erzeugung mehrerer zusammengesetzter Einzelprojektionen, generiert werden kann. Ein "in Bezug auf die Kalibrierstruktur" kalibriertes Bild ist insbesondere im Bereich der Kalibrierstruktur entlang der Projektionsfläche verzerrungsfrei, d.h. es ist z.B. in einer Richtung entlang der ersten und der zweiten Seite der Kalibrierstruktur und in einer Richtung senkrecht dazu im Wesentlichen entzerrt und mehrere Teilbilder der Projektion sind möglichst störungsfrei aneinandergefügt, falls mehrere Projektoren verwendet werden. Das projizierte Bild erscheint somit gewissermaßen wie eine Tapete, die auf die Projektionsfläche abgerollt wird. Möglichkeiten zur Herstellung der kalibrierten Projektion, insbesondere zur Entzerrung des Projektionsbildes, werden weiter unten diskutiert.

Gemäß einer Weiterbildung der Erfindung erfolgt vor der Rekonstruktion der Projektionsfläche gemäß den Schritten e) bis i) eine Korrektur eines Linsenfehlers der Kamera, mit der das Abbild der Kalibrierstruktur erzeugt wird, oder es wird der gemäß Schritt i) rekonstruierte Verlauf der Projektionsfläche unter Berücksichtigung eines Linsenfehlers der Kamera korrigiert. Hierzu können z. B. Linsenentzerrungsverfahren verwendet werden, die Kalibrierkörper oder Kalibrierflächen verwenden oder auch Linsenentzerrungsverfahren, die Entzerrungsparameter aus den Bildinhalten selber bestimmen, eingesetzt werden.

Eine andere Möglichkeit einer (Ad-hoc-) Linsenentzerrung besteht darin, den bekannten Verlauf der ersten und der zweiten Seite der Kalibrierstruktur auszunutzen, wobei die erste und die zweite Seite insbesondere geradlinig verlaufen. Aus der Abweichung des Verlaufs der ersten und der zweiten Seite der mittels der Kamera abgebildeten Kalibrierstruktur von dem Verlauf der (z.B. geradlinig ausgebildeten) ersten und zweiten Seite der tatsächlichen Kalibrierstruktur können Linsenentzerrungsparameter bestimmt werden. Des Weiteren kann z. B. auch ein zusätzliches Kalibriermuster auf die Projektionsfläche im Bereich der Kalibrierstruktur projiziert werden, das insbesondere (gerade) Kalibrierstreifen aufweist, die z. B. senkrecht (z.B. horizontal und/oder vertikal) oder unter einem beliebigen Winkel die erste und die zweite Seite der Kalibrierstruktur berühren oder kreuzen. Die durch diese Berührung oder Kreuzung entstehenden Schnittpunkte werden im Kamerabild erkannt und miteinander verbunden. Diese Verbindungslinien zwischen den Schnittpunkten müssten wieder eine Gerade bilden, da Geraden auch bei einer perspektivischen Aufnahme als Geraden abgebildet werden. Ist dies nicht der Fall (aufgrund der Linsenverzerrung), können Parameter bestimmt werden, um den Effekt der Linsenverzerrung zu korrigieren. Selbstverständlich können anstelle von geradlinigen Streifen auch andere Kalibriermuster verwendet werden, deren Verlauf im Projektorraum, d.h. in der Gegenstandsebene der Projektion bekannt ist.

Insbesondere werden die Linsenverzerrungsparameter mit einem Optimierungsverfahren bestimmt, das ein Anpassen von Korrekturparametern umfasst, bis eine (simulierte) Abbildung der ersten und der zweiten Seite der Kalibrierstruktur und/oder der projizierten Kalibrierstreifen ein Abbild ergibt, dessen Verlauf dem Verlauf der ersten und der zweiten Seite der tatsächlichen Kalibrierstruktur entspricht, z.B. bei gerader erster und zweiter Seite der Kalibrierstruktur entsprechend zwei geraden Linie.

Insbesondere ist die Kalibrierstruktur durch eine dritte und eine vierte Seite begrenzt, die parallel zueinander verlaufen und jeweils senkrecht auf die erste und die zweite Seite treffen, d. h., die Kalibrierstruktur hat die Gestalt eines auf die Projektionsfläche "abgewickelten" Rechtecks.

In einer Weiterbildung des erfindungsgemäßen Verfahrens wird gemäß Schritt d)
- ein erstes Punktepaar bestimmt, das auf einem ersten Randabschnitt (einer ersten Seite) des Abbildes der Kalibrierstruktur liegt, der der ersten Seite der tatsächlichen Kalibrierstruktur entspricht,
- ein zweites Punktepaar bestimmt, das auf einem zweiten Randabschnitt (einer ersten Seite) des Abbildes der Kalibrierstruktur liegt, der der zweiten Seite der tatsächlichen Kalibrierstruktur entspricht,
- ein drittes Punktepaar bestimmt, dessen Punkte Punkten der tatsächlichen Kalibrierstruktur entsprechen, die in einem Bereich der Projektionsfläche liegen, der den größten Abstand zu einer Ebene aufweist, in der die erste und die zweite Seite der Kalibrierstruktur liegen, d.h. in einem Bereich der Projektionsfläche, der die größte räumliche Wölbung bzw. Tiefe aufweist, und
- z.B. die Schritte e) bis g) zunächst für das erste, zweite und dritte Punktepaar durchgeführt werden.

Es wird darauf hingewiesen, dass das Auswählen eines dritten Punktepaares im Bereich der Projektionsfläche mit der größten räumlichen Wölbung oder Tiefe nicht zwingend ist und insbesondere dann erfolgt, wenn im Kamerabild oder im per Homographietransformation transformierten Kamerabild (d.h. im "Abbild" der Projektionsfläche) erkennbar ist, welcher Bereich der Projektionsfläche den größten Abstand zu einer Ebene aufweist, in der die erste und die zweite Seite der Kalibrierstruktur liegen, d. h., welcher Bereich der Projektionsfläche die größte räumliche Tiefe besitzt. Es ist jedoch auch denkbar, dass ein drittes Punktepaar ausgewählt wird, das nur benachbart oder beabstandet zu dem Bereich der Projektionsfläche mit der größten räumlichen Tiefe liegt.

Neben der Bestimmung des erwähnten ersten, zweiten und dritten Punktepaares können selbstverständlich weitere Punktepaare ausgewählt werden, für die (z.B. nach dem Durchführen der Schritte e) bis g) für das erste, zweite und dritte Punktepaar) ebenfalls Stützstrecken bestimmt werden. Insbesondere weisen diese weiteren Stützstrecken die Länge und Orientierung der zuvor durch Optimierung ermittelten, zu dem ersten, zweiten und dritten Punktepaar gehörigen Stützstrecken auf und werden jeweils gewissermaßen in ihr zugehöriges Hilfsstreckenpaar "eingepasst", so dass sie jeweils mit einem ersten Ende den ersten und mit einem zweiten Ende den zweiten Hilfsstrahl des Hilfsstrahlpaares berühren.

Gemäß einer anderen Ausgestaltung der Erfindung werden die erste und die zweite Seite der Kalibrierstruktur durch einen ersten und einen zweiten Rand der Projektionsfläche gebildet, d. h., die Kalibrierstruktur begrenzt einen Abschnitt der Projektionsfläche oder die gesamte Projektionsfläche. Somit bilden z.B. zwei einander gegenüberliegende Seitenränder der Projektionsfläche oder sonstige Strukturen, die die Projektionsfläche definieren, die erste und zweite Seite der Kalibrierstruktur, wobei die Kalibrierstruktur z.B. ausschließlich durch Seiteränder oder sonstige die Projektionsfläche definierende Strukturen ausgebildet ist. Gemäß einer Variante des Verfahrens wird zur Erkennung des besagten ersten und zweiten Randes der Projektionsfläche ein (von einem oder mehreren Projektoren erzeugtes) Bild (z.B. ein Weiß- oder ein Graubild) projiziert, das den Rand der Projektionsfläche überdeckt.

Alternativ oder zusätzlich kann die Kalibrierstruktur zumindest abschnittsweise auf der Projektionsfläche angeordnet oder auf die Projektionsfläche projiziert werden, beispielsweise wird die Kalibrierstruktur in Form eines Materialstreifens auf der Projektionsfläche befestigt (z. B. aufgeklebt) oder die Kalibrierstruktur wird mittels eines Laserstrahls auf die Projektionsfläche projiziert. Die Kalibrierstruktur wird insbesondere so angeordnet, dass sich die erste und/oder die zweite Seite parallel oder senkrecht zu einem Rand der Projektionsfläche oder zu sonstigen, die Projektionsfläche definierenden Strukturen erstreckt.

Es ist auch denkbar, dass die Kalibrierstruktur zumindest teilweise nicht auf der Projektionsfläche angeordnet ist, sondern erst nachträglich dem Abbild der Projektionsfläche hinzugefügt wird, z. B. über eine entsprechende Bildverarbeitung. Insbesondere wird eine Randstruktur oder eine sonstige markante Struktur der Projektionsfläche benutzt, die z.B. nur teilweise oder gar nicht im Kamerabild enthalten ist, deren Verlauf durch einen Betrachter jedoch ermittelbar ist und in Beziehung zu im Kamerabild enthaltenen Strukturen gesetzt werden kann, z.B. ein Rand einer Seitenwand eines Innenraums. Gemäß dieser Variante wird die Kalibrierstruktur also nicht oder zumindest teilweise nicht auf der Projektionsfläche erzeugt oder angeordnet, sondern lediglich dem Kamerabild der Projektionsfläche so hinzugefügt, dass sie einem Abbild einer auf der Projektionsfläche erzeugten oder angeordneten (wie oben beschriebenen) Kalibrierstruktur entspricht. Die oben und weiter unten beschriebenen Verfahrensvarianten sind analog auf diese lediglich dem Kamerabild hinzugefügte (z.B. manuell oder automatisch eingezeichnete) Kalibrierstruktur anwendbar. Natürlich ist auch denkbar, dass Teile der Kalibrierstruktur per Laser erzeugt oder auf der Projektionsfläche angeordnet und andere Teile nachträglich hinzugefügt werden.

Die Projektionsfläche kann sich, wie bereits oben erwähnt, im Prinzip beliebig im Raum erstrecken, unter der Bedingung, dass sie sich im Bereich der Kalibrierstruktur durch einen vertikalen Sweep erzeugt gedacht werden kann. Diese Voraussetzung ermöglicht das Auffinden einer Lösung durch den Rekonstruktionsalgorithmus der Schritte e) bis i), wobei zwar dennoch mehrere Lösungen existieren, die die Bedingung des Schritts h) erfüllen, nämlich Stützstrecken gleicher Länge zu finden, die auf eine gemeinsame Ebene aufsetzen. Diese möglichen Lösungen führen jedoch lediglich zu unterschiedlich skalierten bzw. positionierten Rekonstruktionen der Projektionsfläche.

Das erfindungsgemäße Verfahren lässt sich insbesondere für eine Projektionsfläche durchführen, die im Bereich der Kalibrierstruktur einen ersten Abschnitt und einen zweiten Abschnitt aufweist, der gegenüber dem ersten Abschnitt abgewinkelt oder abgekrümmt verläuft. Dies umfasst z. B. die Ausgestaltung, dass die Projektionsfläche im Bereich der Kalibrierstruktur zumindest abschnittsweise als Mantelfläche eines Zylinders oder eines Zylindersegmentes ausgebildet ist oder z. B. auch wellenförmig verläuft.

Der erste Abschnitt der Projektionsfläche kann sich auch entlang einer ersten Ebene und der zweite Abschnitt der Projektionsfläche entlang einer zweiten Ebene erstrecken. Der erste und der zweite Abschnitt verlaufen somit jeweils plan, wobei die erste und die zweite Ebene jedoch unter einem Winkel zueinander orientiert sind, d.h. die Projektionsfläche weist einen Knick oder eine Ecke auf. Natürlich kann die Projektionsfläche mehrere Knicke aufweisen, d.h. sie umfasst mehrere zumindest im Wesentlichen plane Abschnitte, die unter einem Winkel zueinander orientiert sind. Selbstverständlich kann die Projektionsfläche im Bereich der Kalibrierstruktur sowohl Krümmungen als auch Knicke aufweisen. In einer Variante dient als Projektionsfläche eine Seitenwand eines Innenraums über eine Ecke hinweg oder auch ein Möbelstück, wobei das projizierte Bild sich über das Möbelstück hinaus auf eine Umgebung des Möbelstücks, z. B. eine Wand, erstreckt.

In einer weiteren Ausgestaltung der Erfindung sind zusätzlich die folgenden Schritte vorgesehen:
i) Erzeugen eines transformierten Bildes der Kalibrierstruktur durch Transformieren des Abbildes der Kalibrierstruktur aus der Bildebene der Kamera in eine Hilfsebene, derart, dass der Rand des transformierten Bildes der Kalibrierstruktur eine erste und eine zweite Seite aufweist, die parallel zueinander verlaufen;
ii) Auswählen mehrerer Paare von Punkten des transformierten Bildes der Kalibrierstruktur, die jeweils einen ersten und einen zweiten Punkt eines Randes der transformierten Kalibrierstruktur aufweisen, wobei sich der erste und der zweite Punkt jeweils entlang der ersten oder der zweiten Seite des transformierten Bildes der Kalibrierstruktur gegenüberliegen;
iii) Auswählen von Punktepaaren gemäß Schritt d) durch Identifizieren von Punktepaaren im Abbild der Kalibrierstruktur, die den ausgewählten Punktepaaren des transformierten Bildes der Kalibrierstruktur entsprechen.

Insbesondere erfolgt das Identifizieren der Punktepaare gemäß Schritt iii) durch Rücktransformation der Koordinaten der ausgewählten Punktepaare des transformierten Bildes in die Bildebene. Beispielsweise bildet die Kalibrierstruktur vier Eckpunkte aus, an denen die erste und die zweite Seite der Kalibrierstruktur mit einer dritten und einer vierten Seite unter einem rechten Winkel zusammentreffen, so dass die transformierte Kalibrierstruktur in der Hilfsebene ein Rechteck ergibt. Mit dieser Information kann eine Transformationsvorschrift (insbesondere in Form einer Homographiematrix) zum Erzeugen des transformierten Bildes der Kalibrierstruktur bestimmt werden. Hierbei sind die Seitenlängen der erzeugten rechteckigen transformierten Kalibrierstruktur unerheblich, da für die nachfolgend beschriebene Entzerrung der Projektion keine maßstäbliche Rekonstruktion der Projektionsfläche benötigt wird.

Beispielsweise erfolgt das Transformieren des Abbildes der Kalibrierstruktur aus der Bildebene in die Hilfsebene wie erwähnt mittels einer Homographiematrix und die Rücktransformation mittels der invertierten Homographiematrix. Lässt sich die invertierte Homographiematrix nicht berechnen (was der Fall ist, wenn die Determinante der nicht invertierten Matrix Null ergibt), kann eine neue Homographiematrix zur Rücktransformation bestimmt werden, wobei dann jedoch Quell- und Zielpunkte vertauscht werden.

In einer anderen Weiterbildung der Erfindung wird zum Erzeugen der kalibrierten Projektion
a) mindestens ein Kalibriermuster auf die Projektionsfläche projiziert,
b) mit der Kamera ein Abbild des Kalibriermusters erzeugt, und
c) anhand des Abbildes des Kalibriermusters und des rekonstruierten Verlaufs der Projektionsfläche im Bereich der Kalibrierstruktur Warping-Parameter zur Kalibrierung der Projektion bestimmt.

Beispielsweise weist das projizierte Kalibriermuster in der Gegenstandsebene der Projektion, d. h. das vom Projektor ausgehende Kalibriermuster, ein gleichmäßiges Raster von Gitterpunkten auf, wobei die Projektion in Bezug auf die Kalibrierstruktur derart kalibriert wird, dass die projizierten Gitterpunkte entlang der ersten und der zweiten Seite und/oder senkrecht zu der ersten und der zweiten Seite einen zumindest im Wesentlichen konstanten Abstand zueinander aufweisen. Im Falle mehrerer Projektoren projiziert jeder der Projektoren ein eigenes Kalibriermuster (jeweils mit in der Gegenstandebene der Projektion konstantem Abstand der Gitterpunkte), wobei die Kalibrierung z.B. so erfolgt, dass sich Bereiche der Kalibriermuster der einzelnen Projektoren überlagern und im kalibrierten Bild dann in diesen Überlagerungsbereichen dieselben Bildinhalte dargestellt werden.

Mit einer derartigen Kalibrierung wird eine Projektion erzeugt, die in Bezug auf den Verlauf der Projektionsfläche kalibriert ist und nicht in Bezug auf eine bestimmte Position der Kamera oder eines Betrachters der Projektion. Insbesondere kann ein Bild projiziert werden, das zur Projektionsfläche entzerrt ist, d.h. das projizierte Bild erscheint wie eine Tapete, die auf die (gekrümmte und/oder geknickte) Projektionsfläche abgewickelt ist. Insbesondere kann die Projektion so ausgerichtet sein, dass die Seitenränder des projizierten Bildes parallel zu Seitenrändern der Projektionsfläche verlaufen. Eine derartige Kalibrierung in Bezug auf die Projektionsfläche, d. h. eine von der Betrachterposition unabhängige Kalibrierung, erscheint dem Betrachter als korrekt, da die Wahrnehmung des Menschen auf der Orientierung an Ecken und Kanten im Raum vorhandener Strukturen, z. B. den Seitenrändern der Projektionsfläche, basiert.

In einer weiteren Ausgestaltung der Erfindung weist das Kalibriermuster in der Gegenstandsebene der Projektion eine Mehrzahl jeweils zueinander paralleler erster (z.B. horizontaler) und/oder zweiter (z.B. vertikaler) Streifen auf, wobei die ersten Streifen senkrecht zu den zweiten Streifen verlaufen und die Schnittpunkte der ersten mit den zweiten Streifen die Gitterpunkte des Kalibriermusters bilden. Es sind selbstverständlich auch andere Arten von Kalibriermustern denkbar, z. B. Sinusmuster, Marker und/oder farbige Kalibrierstreifen. Beispielsweise werden die ersten und die zweiten Streifen nacheinander projiziert, wobei jeweils ein Bild der projizierten Streifen aufgenommen wird. Es ist jedoch auch möglich, dass die ersten und die zweiten Streifen zusammen projiziert werden.

Insbesondere wird zur Kalibrierung der Projektion die jeweilige Lage der Gitterpunkte in der Bildebene der Kamera herangezogen, wobei
b) eine Abbildung dieser Gitterpunkte durch die Kamera auf die Projektionsfläche im Bereich der Kalibrierstruktur unter Verwendung der im Bereich der Kalibrierstruktur rekonstruierten Projektionsfläche modelliert wird,
c) das Bestimmen der Warping-Parameter das Ermitteln der jeweiligen Lage der abgebildeten Gitterpunkte auf der Projektionsfläche in Form von uv-Koordinaten der abgebildeten Gitterpunkte umfasst, und
d) anhand dieser uv-Koordinaten die Kalibrierung der Projektion erfolgt.

Insbesondere wird zur Ermittlung der uv-Koordinaten ein Gitterpunkt in der Bildebene der Kamera mit der rekonstruierten Projektionsfläche geschnitten und die uv-Koordinaten der Schnittpunkte bestimmt. Beispielsweise wird das uv-Koordinatensystem so gewählt, dass eine erste Ecke, z.B. die linke untere Ecke, der Kalibrierstruktur den Koordinaten (0.0; 0.0) und eine zweite, diagonal zur ersten Ecke angeordnete Ecke, z.B. die rechte obere Ecke, der Kalibrierstruktur den Koordinaten (1.0; 1.0) entspricht.

Die uv-Koordinaten der Schnittpunkte werden über den Abstand der Schnittpunkte (im rekonstruierten Modell der Projektionsfläche) zu den Rändern der Kalibrierstruktur bestimmt. Die Korrektur erfolgt dann - wie an sich bekannt - per Image Warping (in diesem Fall per uv-Texture-Lookup). Insbesondere wird eine Abbildung zwischen den bestimmten uv-Koordinaten der Schnittpunkte (Quellbereich) und den Koordinaten der Gitterpunkte des Kalibriermusters in der Gegenstandsebene der Projektion (Zielbereich) ermittelt. Der Quellbereich wird somit im Zielbereich abgebildet. Erfolgt dies für alle - aus den Schnittpunkten gebildeten - z.B. dreieckigen oder rechteckigen Zielbereiche und deren korrespondierenden Quellbereichen, ergibt sich eine kalibrierte Projektion.

Bei Verwendung mehrerer Projektoren zum Erzeugen des projizierten Bildes auf der Projektionsfläche ist es zudem auch möglich, die Projektion in Überlappungsbereichen der einzelnen projizierten Bilder zu korrigieren. Hierzu wird das Bild aller (bereits per Image Warping) korrigierten Projektionen mit einem Blendbild moduliert. Entzerrung und Blending kann in Echtzeit erfolgen. Dieses Entzerren in Echtzeit (Echtzeit-Kalibrierung) erfolgt z.B. mit Hilfe eines Computerprogramms oder eines entsprechend programmierten Mikroprozessors und kann beispielsweise auch treiberseitig implementiert sein. Im Ergebnis entsteht ein kalibriertes Bild in Bezug auf die im Raum verlaufende Projektionsfläche und - bei Verwendung mehrerer Projektoren - zusätzlich auch im Hinblick auf die projizierten Einzelbilder zueinander.

Es ist auch denkbar, dass die Echtzeit-Kalibrierung in dem Projektor bzw. den Projektoren erfolgt, wobei z.B. ein entsprechend programmiertes elektronisches Bauteil in den Projektoren vorhanden ist oder ein entsprechendes Softwareprogramm auf einem in den Projektoren vorhandenen elektronischen Bauteil ausgeführt wird. Selbstverständlich kann die Kalibrierung auch mit einer zu den Projektoren separaten programmierten Vorrichtung durchgeführt werden.

Die Erfindung betrifft auch eine Vorrichtung zum Erzeugen einer kalibrierten Projektion auf einer Projektionsfläche, mit
a) Rekonstruktionsmitteln zur Rekonstruktion des räumlichen Verlaufes der Projektionsfläche im Bereich der Kalibrierstruktur, wobei die Rekonstruktionsmittel
b) eine dem Verlauf der Projektionsfläche folgende Kalibrierstruktur und/oder Mittel zum Erzeugen einer Kalibrierstruktur auf der Projektionsfläche aufweisen, wobei die Kalibrierstruktur eine erste Seite und eine zweite Seite, die parallel zu der ersten Seite verläuft, und eine gemessen in Richtung der ersten oder der zweiten Seite konstante Höhe besitzt, aufweisen und ausgehend von einem Abbild der Kalibrierstruktur dazu ausgebildet sind,
c) mehrere Paare von Punkten des Abbildes der Kalibrierstruktur zu bestimmen, die jeweils einen ersten und einen zweiten Punkt des Abbildes der Kalibrierstruktur aufweisen, wobei der erste und der zweite Punkt jeweils einem ersten und einem zweiten Punkt der tatsächlichen Kalibrierstruktur entsprechen, die sich entlang der ersten oder der zweiten Seite der Kalibrierstruktur gegenüberliegen;
d) mehrere Hilfsstrahlpaare zu erzeugen, die jeweils zwei Hilfsstrahlen aufweisen, die von dem ersten und dem zweiten Punkt der Punktepaare zu einem gedachten Fluchtpunkt der Bildebene verlaufen,
e) mehrere zueinander parallele Stützstrecken zu erzeugen, die jeweils auf einem der Hilfsstrahlen eines der Hilfsstrahlpaare beginnen und auf dem jeweils anderen Hilfsstrahl eines der Hilfsstrahlpaare enden,
f) die Länge und/oder die Orientierung der Stützstrecken zu verändern, bis sämtliche Stützstrecken die gleiche Länge aufweisen und jeweils unter dem gleichen Winkel auf eine gemeinsame Ebene aufsetzen,
g) ein Modell der Projektionsfläche unter Verwendung der gemäß Schritt f) gefundenen Stützstrecken zu erzeugen, wobei diese Stützstrecken Streckenabschnitte der gesuchten Projektionsfläche sind, die parallel zu der ersten und zweiten Seite der Kalibrierstruktur verlaufen; und
h) Kalibrierungsmitteln zum Erzeugen einer insbesondere in Bezug auf die Kalibrierstruktur kalibrierten Projektion unter Verwendung eines durch die Rekonstruktionsmittel rekonstruierten räumlichen Verlaufes der Projektionsfläche.

Die erfindungsgemäße Vorrichtung umfasst insbesondere auch mindestens einen Projektor (dessen Projektion kalibriert werden soll) zum Erzeugen einer Projektion auf einer Projektionsfläche und/oder mindestens eine Kamera zum Erzeugen eines Abbildes der Kalibrierstruktur in einer Bildebene. Allerdings kann die Vorrichtung durchaus auch mit einem bereits vorhandenen Projektor und/oder einer bereits vorhandenen Kamera benutzt werden, d.h. der Projektor und/oder die Kamera sind nicht zwingend Bestandteil der erfindungsgemäßen Vorrichtung.

Insbesondere umfassen die Kalibrierungsmittel Mittel zum Projizieren eines Kalibriermusters auf die Projektionsfläche wie weiter oben in Bezug auf das erfindungsgemäße Verfahren beschrieben. Des Weiteren können die Kalibrierungsmittel auch Mittel zum Erzeugen von Warping-Parametern anhand des mit Hilfe der Rekonstruktionsmittel rekonstruierten räumlichen Verlaufs der Projektionsfläche im Bereich der Kalibrierstruktur und des projizierten Kalibriermusters aufweisen. Hierbei sind die Kalibrierungsmittel insbesondere ausgebildet, das weiter oben beschriebene Verfahren zur Erzeugung der kalibrierten Projektion zu realisieren, d.h. insbesondere das Erzeugen eines Kalibriermusters und das Bestimmen von Warping-Parametern unter Verwendung von uv-Koordinaten. Beispielsweise sind die Rekonstruktionsmittel und/oder die Kalibrierungsmittel in Form eines Softwareprogramms oder einer programmierten Vorrichtung realisiert, die z.B. zur Projektion eines Kalibriermusters mit mindestens einem Projektor zusammenwirkt (und z.B. auch in einen Projektor integriert sein kann).

Die Vorrichtung kann auch Mittel (z.B. eine Bildverarbeitungssoftware oder eine Bildverarbeitungsvorrichtung) zum Erzeugen einer Kalibrierstruktur in einem Abbild der Projektionsfläche aufweisen, d.h. auf der Projektionsfläche vorhandene oder projizierte Teilabschnitte einer Kalibrierstruktur können durch nachträgliches Einfügen (Einzeichnen) weiterer Teilabschnitte ergänzt werden.

Die Erfindung umfasst auch ein System aus der beschriebenen Vorrichtung und einer Projektionsfläche.

In einem weiteren Aspekt betrifft die Erfindung auch eine Vorrichtung zum Erzeugen einer kalibrierten Projektion auf einer Projektionsfläche, mit
a) Rekonstruktionsmitteln zur Rekonstruktion des räumlichen Verlaufes der Projektionsfläche im Bereich der Kalibrierstruktur, wobei die Rekonstruktionsmittel
b) Mittel (z.B. eine Bildverarbeitungssoftware oder eine Bildverarbeitungsvorrichtung) zum Erzeugen einer Kalibrierstruktur in einem Abbild der Projektionsfläche aufweisen, wobei die erzeugte Kalibrierstruktur sich derart an charakteristischen Strukturen der Projektionsfläche orientiert, dass sie einem Abbild einer auf der Projektionsfläche angeordneten (aber tatsächlich nicht vorhandenen) Kalibrierstruktur, entspricht, die eine erste Seite und eine zweite Seite, die parallel zu der ersten Seite verläuft, und eine gemessen in Richtung der ersten oder der zweiten Seite konstante Höhe besitzt, und wobei die Rekonstruktionsmitteln dazu ausgebildet sind,
c) mehrere Paare von Punkten der Kalibrierstruktur zu bestimmen, die jeweils einen ersten Punkt und einen zweiten Punkt der Kalibrierstruktur aufweisen, die Punkten einer auf der Projektionsfläche angeordneten Kalibrierstruktur entsprechen, die sich entlang der ersten oder der zweiten Seite der Kalibrierstruktur gegenüberliegen;
d) mehrere Hilfsstrahlpaare zu erzeugen, die jeweils zwei Hilfsstrahlen aufweisen, die von dem ersten und dem zweiten Punkt der Punktepaare zu einem gedachten Fluchtpunkt vor der Bildebene verlaufen,
e) mehrere Stützstrecken zu erzeugen, die jeweils auf einem der Hilfsstrahlen eines der Hilfsstrahlpaare beginnen und auf dem jeweils anderen Hilfsstrahl des Hilfsstrahlpaares enden,
f) die Länge und/oder die Orientierung der Stützstrecken zu verändern, bis sämtliche Stützstrecken die gleiche Länge aufweisen und jeweils unter dem gleichen Winkel auf eine gemeinsame Ebene aufsetzen,
g) ein Modell der Projektionsfläche unter Verwendung der gemäß Schritt f) gefundenen Stützstrecken zu erzeugen, wobei diese Stützstrecken Streckenabschnitte der gesuchten Projektionsfläche sind, die parallel zu der ersten und zweiten Seite der Kalibrierstruktur verlaufen; und
h) Kalibrierungsmitteln zum Erzeugen einer kalibrierten Projektion unter Verwendung eines durch die Rekonstruktionsmittel rekonstruierten räumlichen Verlaufes der Projektionsfläche.

Die Erfindung wird im Folgenden anhand von Ausführungsbeispielen unter Bezugnahme auf die Figuren näher erläutert. Es zeigen:
- Figur 1A: ein herkömmlich projiziertes Bilde aus Sicht einer vor der Projektionsfläche positionierten Kamera;
- Figur 1B: die Projektion aus Figur 1A aus einer von der Kameraposition verschiedenen Betrachterposition;
- Figur 2A: die Projektion der Figuren 1A und 1B nach Kalibrierung in Bezug auf die Kameraposition;
- Figur 2B: die kalibrierte Projektion der Figur 2A aus der Betrachterposition der Figur 1 B;
- Figur 3A: eine gemäß einem ersten Ausführungsbeispiel der Erfindung erzeugte kalibrierte Projektion aus Sicht der Kamera;
- Figur 3B: die kalibrierte Projektion der Figur 3A aus der Betrachterposition der Figuren 1B und 2B;
- Figur 4: eine gemäß einem zweiten Ausführungsbeispiel des erfindungsgemäßen Verfahrens erzeugte kalibrierte Projektion;
- Figur 5A: eine Projektion vertikaler Kalibrierstreifen eines Projektors;
- Figur 5B: eine Projektion eines vertikalen Referenzstreifens des Projektors aus Figur 5A;
- Figur 5C: eine Projektion horizontaler Kalibrierstreifen eines weiteren Projektors;
- Figur 5D: eine Projektion eines horizontalen Referenzstreifens des Projektors aus Figur 5C;
- Figur 6: eine schematische Darstellung eines Verfahrensschritts der erfindungsgemäßen Verfahrens;
- Figur 7: ein Ablaufdiagramm zu einem weiteren Ausführungsbeispiels des erfindungsgemäßen Verfahrens; und
- Figuren 8A und 8B: eine Illustration zur Veranschaulichung der Erzeugung einer kalibrierten Projektion unter Verwendung von uv-Koordinaten.

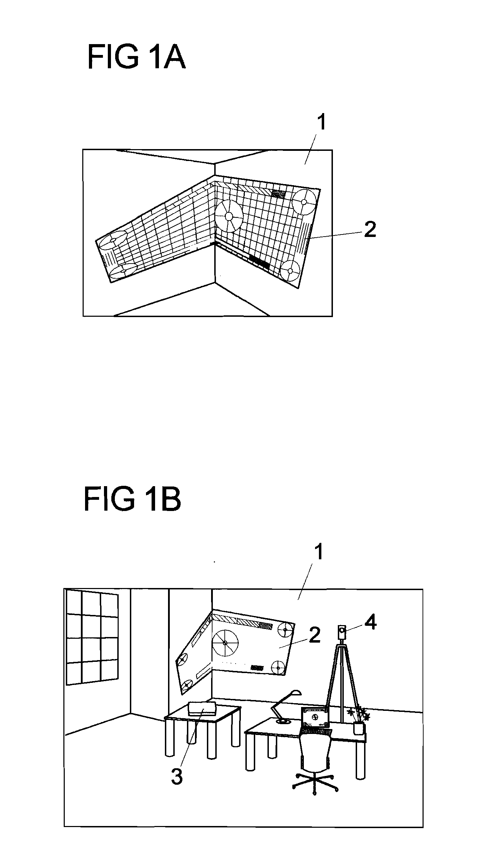

Die Figuren 1A und 1B zeigen jeweils ein mittels eines Projektors 3 auf eine Projektionsfläche 1 projiziertes unkalibriertes Projektionsbild 2, wobei Figur 1A das Projektionsbild aus Sicht einer vor der Projektionsfläche positionierten Kamera 4 zeigt, während Figur 1B das Projektionsbild 2 aus Sicht einer von der Kameraposition verschiedenen Betrachterposition darstellt. Das Projektionsbild 2 ist abhängig von der Position des Projektors 3 relativ zu der Projektionsfläche 1 verzerrt. Insbesondere sorgt die Tatsache, dass die Projektionsfläche 2 als Teilbereich einer Innenwand eines Raumes ausgebildet ist, der sich über eine Ecke der Innenwand hinweg erstreckt, dafür, dass ein stark verzerrtes Projektionsbild entsteht.

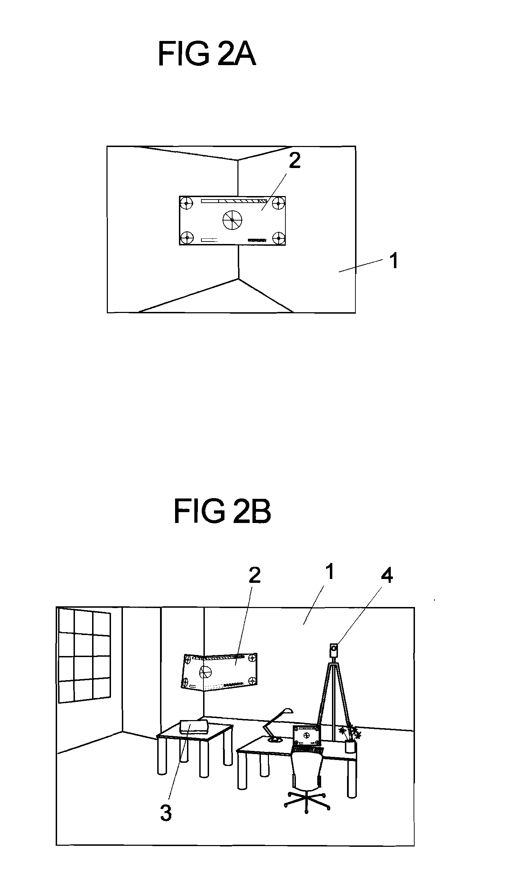

Eine Möglichkeit, eine kalibrierte Projektion zu erzeugen, ist in den Figuren 2A und 2B illustriert. Hier erfolgt die Kalibrierung des Projektionsbildes 2 derart, dass es in Bezug auf den Kamerastandpunkt entzerrt erscheint, d. h., das Projektionsbild 2 ist so kalibriert, dass es in Richtung der Seitenränder des Kamerabildes entzerrt ist und die Seitenränder der Projektion parallel zu den Seitenrändern des Kamerabildes verlaufen. Allerdings erscheint das auf diese Weise kalibrierte Projektionsbild nur aus Perspektive der Kamera korrekt, sobald ein anderer Standort in Bezug zur Projektionsfläche 1 gewählt wird, wirkt das Bild verzerrt, wie in Figur 2B zu erkennen. Insbesondere wird eine derartige Projektion, die nicht parallel zu Begrenzungskanten (z.B. zwischen der Seitenwand und dem Boden und/oder der Decke) des Innenraumes ausgerichtet ist, aus wahrnehmungspsychologischen Gründen als nicht korrekt wahrgenommen.

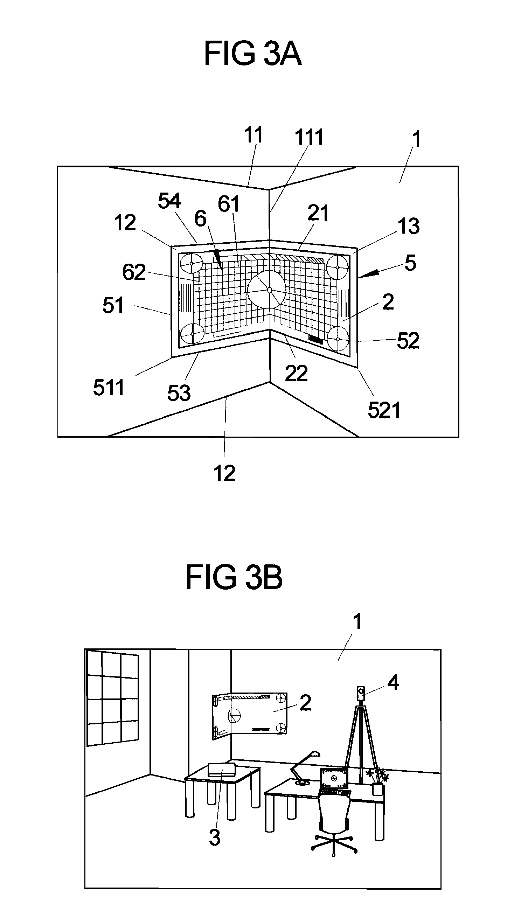

Mit dem erfindungsgemäßen Verfahren, wonach der Verlauf der (gemäß dem Beispiel der Figuren 1 bis 3 einen Knick aufweisenden) Projektionsfläche 1 rekonstruiert und das Projektionsbild unter Verwendung dieses rekonstruierten Verlaufes der Projektionsfläche kalibriert wird, ist insbesondere eine Kalibrierung des Projektionsbildes in Bezug auf die Seitenränder der Projektionsfläche möglich. Gemäß Figur 3A ist das Projektionsbild 2 so kalibriert, dass sein oberer und unterer Seitenrand 21, 22 parallel zu einem oberen bzw. einem unteren Seitenrand 11, 12 der Projektionsfläche 1 verlaufen, wobei die Seitenränder 11, 12 in diesem Beispiel durch einen zwischen der die Projektionsfläche bildenden Seitenwand eines Innenraums und einer Decke bzw. einem Boden des Innenraums verlaufenden Winkel gebildet ist.

Das Projektionsbild 2 ist so in Bezug auf die Projektionsfläche kalibriert (entzerrt), dass Strukturen, die in der Gegenstandsebene der Projektion gleiche Abstände aufweisen, entlang der Projektionsfläche und parallel und senkrecht zu den Seitenrändern 11, 12 der Projektionsfläche 1 ebenfalls gleiche Abstände besitzen, so dass der Eindruck entsteht, das Projektionsbild 2 sei tapetenartig auf die Projektionsfläche 1 "aufgeklebt". Durch diese Kalibrierung wirkt das projizierte Bild 2 unabhängig vom Betrachterstandpunkt korrekt; vgl. Figur 3B.

Um die in den Figuren 3A und 3B dargestellte Kalibrierung in Bezug auf die Projektionsfläche erzeugen zu können, wird wie erwähnt in einem ersten Verfahrensabschnitt der Verlauf der Projektionsfläche 1 rekonstruiert. Hierzu weist die Projektionsfläche 1 eine Kalibrierstruktur 5 auf, die eine erste Seite 51 und eine zur ersten Seite parallele zweite Seite 52 aufweist. Des Weiteren weist die Kalibrierstruktur 5 eine Verbindungslinie in Form einer dritten (unteren) Seite 53 auf, die ein erstes (unteres) Ende 511 der ersten Seite 51 mit einem ersten (unteren) Ende 521 der zweiten Seite 52 verbindet. Des Weiteren weist die Kalibrierstruktur 5 eine vierte Seite 54 auf, die sich parallel zur dritten Seiten 53 erstreckt.

Die Projektionsfläche 1 verläuft im Bereich der Kalibrierstruktur 5, d. h. vorliegend in einem Bereich innerhalb der Kalibrierstruktur 5, in Form einer Fläche, die durch Verschieben der dritten Seite 53 entlang der ersten und der zweiten Seite 51, 52 (d. h. nach oben) entstehen kann. Mit anderen Worten verläuft die Projektionsfläche 1 im Bereich der Kalibrierstruktur 5 nicht entlang einer einzigen Fläche plan wie eine konventionelle Projektionsfläche, sondern erstreckt sich dadurch im Raum, dass ein erster Abschnitt 12 entlang einer Linie 111 (einer Ecke der Seitenwand) von einem zweiten Abschnitt 13 abknickt. Beispielsweise wird die Kalibrierstruktur 5 mit Hilfe eines Lasers auf die Projektionsfläche 1 projiziert und verläuft insbesondere so, dass ihre dritte und vierte Seite 53, 54 parallel zum oberen und unteren Seitenrand 11, 12 der Projektionsfläche 1 orientiert sind. Selbstverständlich kann die Kalibrierstruktur 5 auch so beschaffen sein, dass sie eine Fläche begrenzt, die der Fläche des projizierten Bildes entspricht oder die kleiner ist als die Fläche des projizierten Bild, so dass sich die Projektion 2 über die Kalibrierstruktur 5 hinaus erstreckt.

In einer anderen Variante wird die Kalibrierstruktur zumindest teilweise dadurch erzeugt, dass sie dem mittels der Kamera aufgenommenen Bild der Projektionsfläche nachträglich hinzugefügt wird, beispielsweise dadurch, dass dem Bild der Projektionsfläche Linien (manuell oder automatisch) hinzugefügt werden, die parallel zu charakteristischen Strukturen der Projektionsfläche verlaufen, z.B. parallel zu den Seitenwandrändern 11, 12 und/oder dem Knick 111.

Die kalibrierte Projektion 2 weist zudem Teststrukturen 6 in Form einer Mehrzahl erster (horizontaler) Streifen 61 und einer Mehrzahl zweiter (vertikaler) Streifen 62 auf. Die Schnittpunkte der ersten Streifen 61 mit den zweiten Streifen 62 bilden in der Gegenstandsebene der Projektion Gitterpunkte eines gleichmäßigen Gitters. Die Kalibrierung des projizierten Bildes erfolgte derart, dass diese Gitterpunkte entlang der ersten und zweiten Seite 51, 52 der Kalibrierstruktur 5 und/oder entlang der dritten und vierten Seite 53, 54 der Kalibrierstruktur (entlang der Projektionsfläche 1) einen konstanten Abstand zueinander aufweisen.

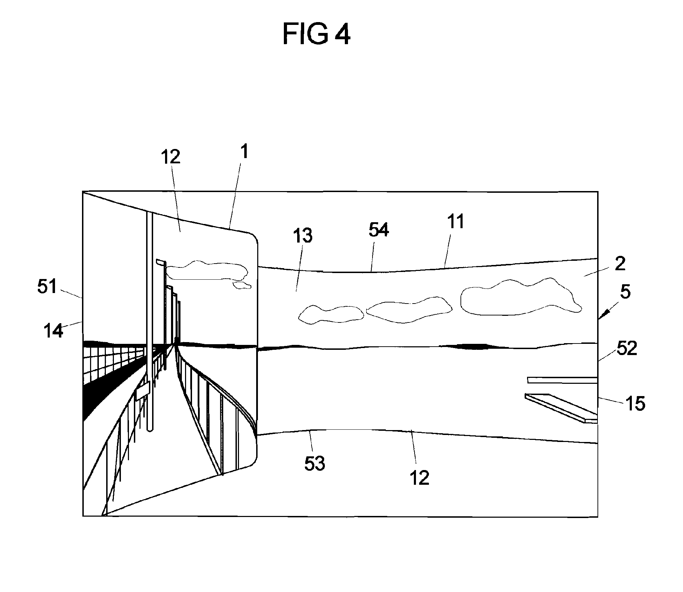

Figur 4 zeigt ein weiteres Beispiel einer mittels des erfindungsgemäßen Verfahrens kalibrierten Projektion. Das projizierte Bild 2 schmiegt sich tapetenartig einer gekrümmten Projektionsfläche 1 an, die durch (horizontale) Seitenränder 11, 12 und (vertikale) Seitenränder 14, 15 begrenzt ist.

Um eine derartige Kalibrierung zu erzielen, wird wiederum unter Verwendung einer Kalibrierstruktur 5 der Verlauf der Projektionsfläche rekonstruiert. Im Beispiel der Figur 4 dienen als Kalibrierstruktur die Seitenränder 11-15 der Projektionsfläche 1, wobei der erste vertikale Seitenrand 14 die erste Seite 51 der Kalibrierstruktur und der zweite vertikale Seitenrand 15 die zweite Seite 52 der Kalibrierstruktur 5 ausbildet. Die beiden Seiten 51, 52 sind über eine erste (untere) Verbindungslinie 53, die dem (unteren) horizontalen Seitenrand 12 der Projektionsfläche entspricht, und eine zweite (obere) Verbindungslinie 54, die dem (oberen) Seitenrand 11 der Projektionsfläche entspricht, miteinander verbunden. Die Projektionsfläche erstreckt sich wiederum ohne Beulen und Dellen, d. h. sie ist in Form einer um eine vertikal, d. h. parallel zu den Rändern 51, 52 der Kalibrierstruktur, verlaufende Achse gekrümmte und/oder abgewinkelte Fläche ausgebildet.

Anders formuliert, entsteht die Projektionsfläche 1 durch vertikales Verschieben der unteren Verbindungslinie 53 entlang der Seiten 51, 52. Im vorliegenden Beispiel weist die Projektionsfläche 1 einen ersten Abschnitt 12 auf, der gegenüber einem zweiten Abschnitt 13 abgekrümmt verläuft, wobei die Projektionsfläche mehrere Krümmungen (teilweise unterschiedlichen Vorzeichens) aufweist. Selbstverständlich erfasst das erfindungsgemäße Verfahren Projektionsflächen mit im Prinzip beliebigen Kombinationen von Krümmungen und Knicken.

Es wird darauf hingewiesen, dass die Darstellung der Figuren 3A, 3B sowie 4 eigentlich einem Kamerabild der Projektionsfläche und der Kalibrierstruktur entsprechen, weshalb z.B. in Figur 4 der Seitenrand 14 länger erscheint als der gegenüberliegende Seitenrand 15. Da der tatsächliche Verlauf des Seitenrandes der Projektionsfläche (und damit des Seitenrandes der Kalibrierstruktur) bekannt ist, kann aus dem Unterschied zwischen dem Bild der Kalibrierstruktur und dem tatsächlichen Verlauf der Kalibrierstruktur der räumliche Verlauf der Projektionsfläche im Bereich der Kalibrierstruktur ermittelt werden, wie oben beschrieben.

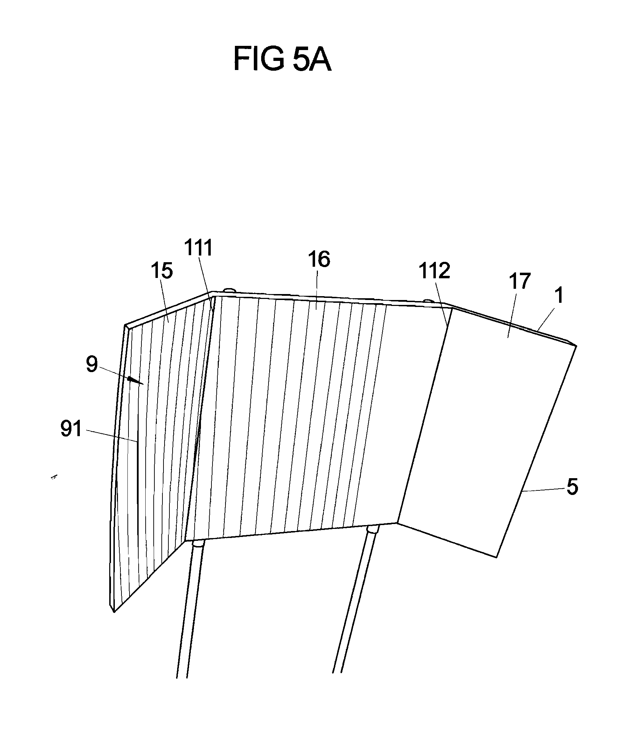

Die Figuren 5A bis 5D beziehen sich auf die Projektion von Kalibriermustern zur Herstellen einer kalibrierten Projektion im Rahmen des erfindungsgemäßen Verfahrens. Beispielsweise zeigt Figur 5A eine Projektionsfläche 1 (in Form einer Leinwand), die zwei Knicke 111, 112 besitzt, so dass die Projektionsfläche 1 drei Abschnitte 15-17 aufweist, die jeweils in Bezug auf einen benachbarten Abschnitt abgewinkelt verlaufen. Der Rand der Projektionsfläche definiert in diesem Beispiel die Kalibrierstruktur 5 zur Rekonstruktion des räumlichen Verlaufes der Projektionsfläche.

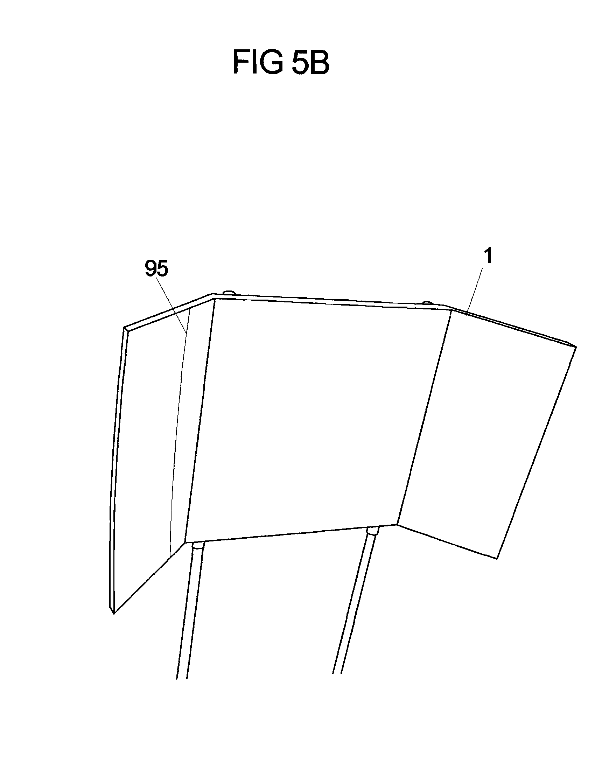

Auf die Projektionsfläche wird ein Kalibriermuster 9 projiziert, das eine Mehrzahl erster (vertikaler) Kalibrierstreifen 91 umfasst und mit der Kamera aufgenommen, wobei die Kalibrierstreifen auch aufgrund der (noch nicht korrigierten) Kameralinsenverzerrung verzerrt sind. Da möglicherweise nicht sämtliche (in der Gegenstandsebene der Projektion) vorhandenen Kalibrierstreifen auch auf die Projektionsfläche projiziert werden (sondern neben die Projektionsfläche), wird ein Referenzmuster projiziert, mit dessen Hilfe ermittelt werden kann, welche der Kalibrierstreifen auf die Projektionsfläche abgebildet werden. Beispielsweise besteht das Referenzmuster, wie in Fig. 5B gezeigt, aus einem einzelnen Referenzstreifen 95, der einem der projizierten Kalibrierstreifen entspricht und dessen Lage in Bezug auf die übrigen Kalibrierstreifen (in der Gegenstandsebene der Projektion) bekannt ist. Ausgehend von der Lage des Referenzstreifens 95 auf der Projektionsfläche (d.h. relativ zu den Seitenrändern der Projektionsfläche) kann bestimmt werden, welche der Kalibrierstreifen 91 auf der Projektionsfläche 1 abgebildet werden.

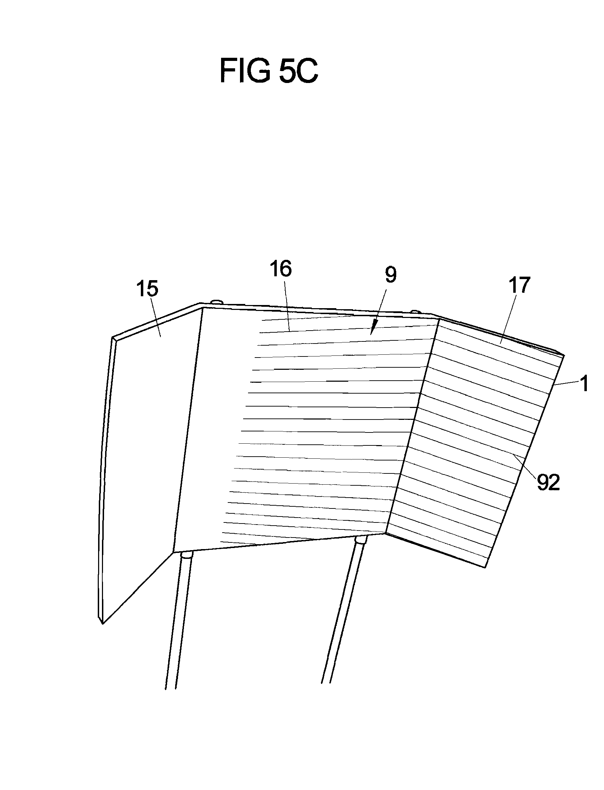

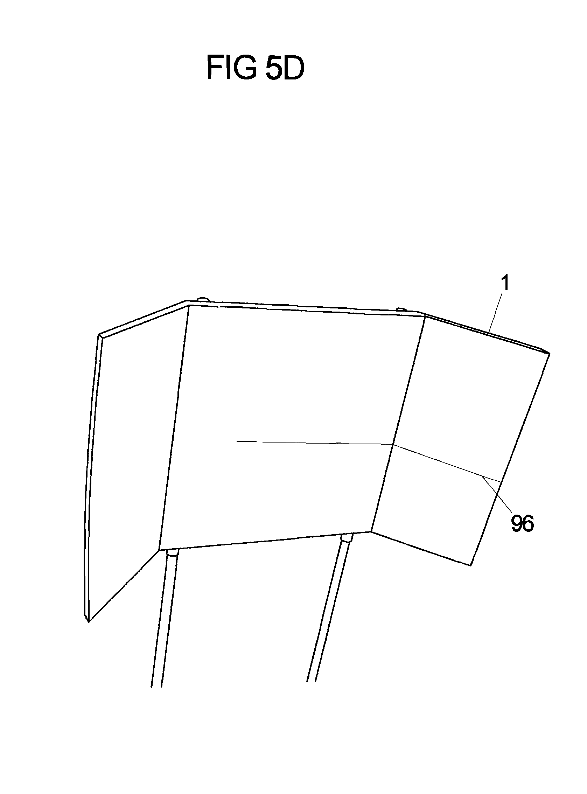

Die Figuren 5C und 5D betreffen die Projektion horizontaler Kalibrierstreifen 92 bzw. eines horizontalen Referenzstreifens 96. Selbstverständlich können die vertikalen Streifen 91 und die horizontalen Streifen 92 auch gemeinsam projiziert werden. Auch können die Referenzstreifen 95, 96 gemeinsam mit den Kalibriermustern projiziert werden, wobei sie z.B. zusätzliche Strukturen zur Unterscheidung von dem eigentlichen Kalibriermuster aufweisen können. Werden mehrere Projektoren verwendet, projiziert insbesondere jeder der Projektoren ein bzw. die Kalibriermuster.

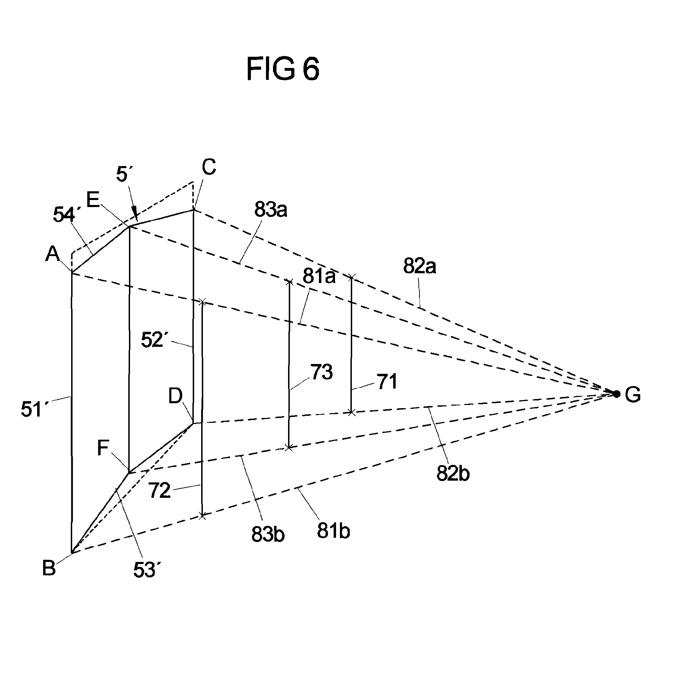

Figur 6 illustriert einen Verfahrensschritt bei der Rekonstruktion der Projektionsfläche gemäß dem erfindungsgemäßen Verfahren. Es wird (in der Bildebene einer Kamera, angedeutet durch gestrichelten Rahmen) ein Abbild 5' (Kamerabild) der Kalibrierstruktur erzeugt, das die Seiten 51' bis 54' aufweist. Die Seiten 51' und 52' verlaufen dabei gerade (jedoch nicht unbedingt parallel zu den Rändern des Kamerabildes) und entsprechen z.B. einem Abbild der Seiten 51 und 52 der Kalibrierstruktur 5 in Fig. 3B. Die untere Seite 53' entspricht der unteren Seite 53 und die obere Seite 54' der oberen Seite 54 der Kalibrierstruktur 5, wobei die Seiten 53' und 54' aufgrund eines Knicks (entsprechend dem Knick 111 in Fig. 3A) in der Projektionsfläche nicht geradlinig verlaufen, sondern jeweils an einem Punkt abknicken, in dem die Projektionsfläche ihre größte räumliche Ausdehnung aufweist.

Ausgehend von dem Abbild 5' der Kalibrierstruktur werden mehrere Punktepaare ausgewählt, von denen in Figur 6 drei dargestellt sind, nämlich ein erstes Paar, das die Punkte A und B enthält, die gleichzeitig Eckpunkte der abgebildeten Kalibrierstruktur 5' sind und die einander gegenüberliegende Enden der ersten Seite 51' bilden, und ein zweites Paar, das die Punkte C und D aufweist, die die Enden der zweiten Seite 52' bilden. Die ausgewählten Punkte A und B bzw. C und D entsprechen, da sie Eckpunkte der abgebildeten Kalibrierstruktur 5' sind, Punkten (ebenfalls Eckpunkten) der tatsächlichen Kalibrierstruktur (nicht dargestellt), die sich entlang der ersten bzw. der zweiten Seite der tatsächlichen Kalibrierstruktur gegenüberliegen. Darüber hinaus wird ein weiteres Punktepaar (E, F) an der Knickstelle der Seiten 53' und 54' ausgewählt.

Ausgehend von den Punktepaaren (A,B), (C,D) und (E,F) werden drei Hilfsstrahlpaare gebildet, die jeweils zwei Hilfsstrahlen 81 a, 81b;82a, 82b und 83a, 83b aufweisen, die von dem ersten und dem zweiten Punkt A, B;C, D und E, F der Punktepaare zu einem gedachten Fluchtpunkt F vor der Bildebene der Kamera (bzw. allgemein vor einer Ebene, in der sich das Abbild 5' der Kalibrierstruktur erstreckt) verlaufen. Darüber hinaus werden mehrere zueinander parallele Stützstrecken 71, 72, 73 erzeugt, die jeweils auf einem der Hilfsstrahlen 81 a, 82a, 83a beginnen und auf dem jeweiligen anderen Hilfsstrahl 81 b, 82b, 83b der Hilfsstrahlpaare enden.

Die Stützstrecken 71, 72, 73 werden in ihrer Länge und Orientierung so lange verändert, bis sie die gleiche Länge aufweisen und jeweils unter dem gleichen Winkel auf eine gemeinsame Ebene (nicht dargestellt) aufsetzen (Optimierungsverfahren). Mit Hilfe der so gefundenen Stützstrecken wird dann die Projektionsfläche im Bereich der Kalibrierstruktur rekonstruiert, wobei die gefundenen Stützstrecken Abschnitte der gesuchten Projektionsfläche sind, die parallel zu der ersten und der zweiten Seite der Kalibrierstruktur orientiert sind. Die auf diese Weise gefundene Projektionsfläche ist nicht unbedingt maßstäblich mit der tatsächlichen Projektionsfläche, was für das Erzeugen der kalibrierten Projektion jedoch keine Rolle spielt.

Selbstverständlich können mehr als drei Punktepaare ausgewählt werden, um die Projektionsfläche zu rekonstruieren. Zudem wird darauf hingewiesen, dass auch andere als die in Fig. 6 dargestellten Punktepaare ausgewählt werden können. Insbesondere muss das dritte Punktepaar nicht zwingend aus einem Bereich der Projektionsfläche, der die größte räumlichen Wölbung oder Tiefe aufweist, ausgewählt werden.

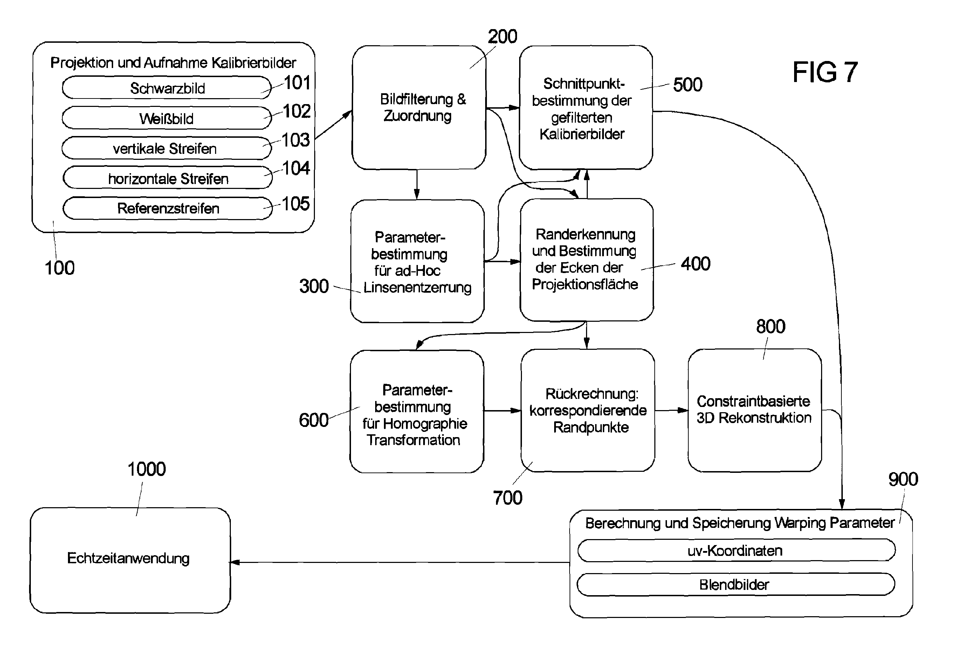

Figur 7 zeigt ein Ablaufdiagramm eines weiteren Ausführungsbeispiels des erfindungsgemäßen Verfahrens. Danach werden in einem ersten Schritt 100 verschiedene Kalibrierbilder auf eine Projektionsfläche projiziert. Dazu gehören ein Schwarzbild 101, das von den übrigen Kalibrierbildern subtrahiert wird, insbesondere um störende Hintergrundobjekte und Rauschen zu entfernen.

Des Weiteren wird ein Weißbild 102 projiziert, das insbesondere dazu dient, Ränder und Ecken der Projektionsfläche zu ermitteln, um diese als Kalibrierstruktur für die Rekonstruktion des räumlichen Verlaufes der Projektionsfläche nutzen zu können.

Des Weiteren wird ein erstes Kalibriermuster 103 projiziert, das eine Mehrzahl vertikaler Streifen aufweist, sowie ein zweites Kalibriermuster 104, das eine Mehrzahl horizontaler Streifen aufweist. Des Weiteren werden Referenzstreifen 105 projiziert, die dazu dienen, die Streifen der Kalibriermuster 103, 104 eindeutig identifizieren zu können.

Die projizierten Kalibrierbilder 101-105 werden mit einer Digitalkamera aufgenommen, wobei z.B. jedes der Kalibrierbilder gesondert aufgenommen wird. Es ist jedoch auch denkbar, dass einige der Kalibrierbilder gleichzeitig projiziert und auch zusammen aufgenommen werden, z. B. die Kalibriermuster 103 bis 105. Des Weiteren ist es natürlich auch möglich, dass mehrere Projektoren zum Erzeugen des Projektionsbildes verwendet werden, so dass die gemäß Schritt 100 zu projizierenden Kalibrierbilder nacheinander durch jeden der verwendeten Projektoren projiziert und aufgenommen werden.

Es ist möglich, dass einige der projizierten Streifen der Kalibriermuster 103, 104 nicht mehr von der Kamera erfasst werden und/oder außerhalb der Projektionsfläche liegen, so dass anhand des Kamerabildes nicht eindeutig bestimmt werden kann, welche der projizierten Kalibrierstreifen im Bereich der Projektionsfläche liegen. Eine eindeutige Zuordnung der projizierten und per Kamera abgebildeten Kalibrierstreifen ist jedoch für eine Bestimmung der Warping-Parameter zur Kalibrierung des zu projizierenden Bildes sinnvoll. Zum Zwecke der eindeutigen Zuordnung der Kalibrierstreifen werden die Referenzstreifen 105 projiziert, die so gestaltet sind, dass über sie (insbesondere über ihre Lage relativ zu den Kalibrierstreifen) die projizierten Kalibrierstreifen eindeutig identifizierbar sind. Beispielsweise können anstelle von Streifen auch Referenzmuster anderer Geometrie verwendet werden oder auch die kodierte Lichtschnitttechnik.

Die aufgenommenen Kalibriermuster 103 bis 105 werden z.B. gemäß dem Schritt 200 binarisiert, insbesondere um Verfälschungen durch Effekte wie z. B. Sampling, Linsenverzerrung, Zoom, Blooming oder Antialiasing zu korrigieren. Hierbei wird insbesondere über ein Histogramm eine Binärfilterschwelle bestimmt, wobei auch ein Einfluss des Vignetting berücksichtigt werden kann. Mit Hilfe dieser Binärfilterschwelle erfolgt eine Schwarz-Weiß-Filterung des Abbildes der Kalibriermuster 103 bis 105, wobei z.B. auch eventuell auftretende Fehler innerhalb der gefilterten Streifen mit morphologischen Operationen gefüllt werden können.

Die auf diese Weise bearbeiteten Kalibriermuster, die z. B. mehrere Pixel breit sein können, können zudem insbesondere mit jeweils zwei vertikalen (in entgegengesetzten Richtungen) und/oder zwei horizontalen (ebenfalls in entgegengesetzten Richtungen) Versatzfiltern behandelt werden, so dass jeweils Ränder der projizierten Streifen extrahiert werden (linker und rechter Rand der vertikalen Streifen bzw. oberer und unterer Rand der horizontalen Streifen). Die so ermittelten Streifenränder werden für die nachfolgende durchzuführende Bestimmung der Schnittpunkte der vertikalen und der horizontalen Streifen verwendet.

Die Filterung der projizierten Kalibrierstreifen kann auch mit einem Gradienten-Verfahren erfolgen.

In einem weiteren Schritt 300 erfolgt eine Bestimmung von Parametern für eine Ad-hoc-Linsenentzerrung. Diese Parameterbestimmung erfolgt insbesondere unter Verwendung des bekannten Verlaufs der Kalibrierstruktur, d. h. im vorliegenden Beispiel anhand des Verlaufs der geraden Seitenränder der Projektionsfläche wie bereits weiter oben beschrieben.

Basierend auf dem projizierten Weißbild 102 erfolgt die Randerkennung der Projektionsfläche (Schritt 400), wobei z.B. ein beidseitiger vertikaler und/oder horizontaler Versatzfilter auf das Weißbild angewendet wird. Beispielsweise können ausgehend von diesem gefilterten Weißbild die Eckpunkte der Projektionsfläche (in der Bildebene der Kamera) bestimmt werden, indem die End- bzw. Startpunkte von zwei angrenzenden Randsegmente gemittelt werden. Des Weiteren erfolgt das Bestimmen der Schnittpunkte der projizierten ersten (horizontalen) und zweiten (vertikalen) Kalibrierstreifen 103, 104 gemäß Schritt 500. Hierbei werden ausgehend von dem binarisierten Abbild der Kalibrierstreifen 103, 104 die Schnittpunkte ihrer Ränder bestimmt. Somit ergeben sich pro Schnittpunkt eines vertikalen mit einem horizontalen Streifen vier Schnittpunkte der jeweiligen Ränder der Streifen, auf deren Basis der gesuchte Schnittpunkt der Kalibrierstreifen durch Mittlung bestimmt wird. Die Position der so gefundenen Schnittpunkte (die Gitterpunkte eines Kalibriergitters bilden) wird insbesondere unter Verwendung der ermittelten Linsenverzerrung korrigiert, so dass von kamerabedingten Verzerrungen bereinigte Schnittpunkte vorliegen.

Wurden die Kalibrierstreifen mit einem Gradienten-Verfahren gefiltert, werden diese Kalibrierstreifen nur durch einen Linienzug repräsentiert. Somit liegt nur ein Schnittpunkt vor, bei dem lediglich die Linsenverzerrung zu korrigieren ist.

Die auf die oben beschriebene Weise bestimmten Schnittpunkte der Kalibrierstreifen 103, 104 liegen innerhalb des projizierten Bildes, d.h. mit einem gewissen Abstand zu dem Seitenrand der Projektionsfläche. Um die Kalibrierung bis hinein in den Randbereich des projizierten Bildes ausdehnen zu können, wird ein das projizierte Bild umlaufender Schnittpunktrand extrapoliert. Hierzu wird z.B. davon ausgegangen, dass der Abstand der Kalibrierstreifen relativ klein ist, so dass ein durch benachbarte Kalibrierstreifen begrenztes Viereck in der Bildebene der Kamera in etwa einem Viereck in einer schräg zu der Bildebene liegenden Ebene entspricht. Unter dieser Annahme wird eine Transformationsvorschrift ermittelt, die auf ein Gittepunktviereck am Rande des projizierten Bildes angewendet wird, um einen Schnittpunkt einer Seite dieses Gittepunktvierecks, d.h. einer Linie zwischen einem Rasterpunkt innerhalb der Projektionsfläche und einem Rasterpunkt außerhalb der Projektionsfläche, mit dem Rand der Projektionsfläche zu ermitteln.

In weiteren Schritten 600, 700 erfolgt eine Homographie-Transformation zum Erzeugen eines transformierten Bildes der Kalibrierstruktur in einer Hilfsebene, um Punktepaare auszuwählen und mittels einer inversen Homographie-Transformation in dem Abbild der Kalibrierstruktur zu identifizieren, wie weiter oben beschrieben. Die so identifizierten Punktepaare dienen zur Konstruktion der Stützstrecken wie anhand der Figur 5 erläutert.

Schließlich erfolgt die Rekonstruktion 800 der Projektionsfläche unter Verwendung der Eigenschaften ("constraints") der Kalibrierstruktur und der Projektionsfläche im Bereich der Kalibrierstruktur, wonach insbesondere die erste und die zweite Seite der Kalibrierstruktur parallel zueinander verlaufen und Projektionsfläche durch einen vertikalen Sweep erzeugbar ist, wie weiter oben ausführlich beschrieben. In einer Variante wird der Verlauf der Projektionsfläche im Bereich der Kalibrierstruktur durch ein Drahtgittermodell rekonstruiert.

Unter Verwendung der gemäß Schritt 800 rekonstruierten Projektionsfläche erfolgt schließlich die Kalibrierung der Projektion, wobei im Schritt 900 Warping-Parameter in Form von uv-Koordinaten und Blendbildern erzeugt werden. Insbesondere lässt sich anhand der Lage der Gitterpunkte bzw. der Streifen der Kalibriermuster unterschiedlicher Projektoren und deren uv-Koordinaten bestimmen, welche Bereiche der Projektion sichtbar sind (weiß im Blendbild), welche außerhalb der Projektionsfläche liegen (schwarz im Blendbild) und wo sich Überlappungsbereiche der durch die unterschiedlichen Projektoren projizierten Bilder befinden (Graukeil im Blendbild).

Die Entzerrung und das Aneinanderfügen der Teilbilder bei Verwendung mehrerer Projektoren erfolgt gemäß Schritt 1000 in Echtzeit. Beispielsweise wird das Bild eines Projektors mittels der bestimmten uv-Koordinaten ("uv-texture-lookup") transformiert und mit einem entsprechenden Blendbild moduliert, so dass ein kalibriertes Bild bezüglich der Projektionsfläche und auch bezüglich der einzelnen Bilder zueinander (bei Verwendung mehrerer Projektoren) erzeugt wird.

Es wird darauf hingewiesen, dass im Ausführungsbeispiel der Figur 6 nicht unbedingt sämtliche anhand der Fig. 6 beschriebenen Verfahrensschritte verwendet werden müssen. Es ist auch möglich, dass auf einige der Schritte verzichtet wird oder einige der Schritte in modifizierter Form realisiert werden. Beispielsweise ist für das Ausführungsbeispiel der Figur 6 nicht zwingend, dass der Seitenrand der Projektionsfläche als Kalibrierstruktur verwendet wird, sondern eine gesonderte Kalibrierstruktur, so dass z.B. auf das Projizieren des Weißbildes 102 verzichtet werden kann.

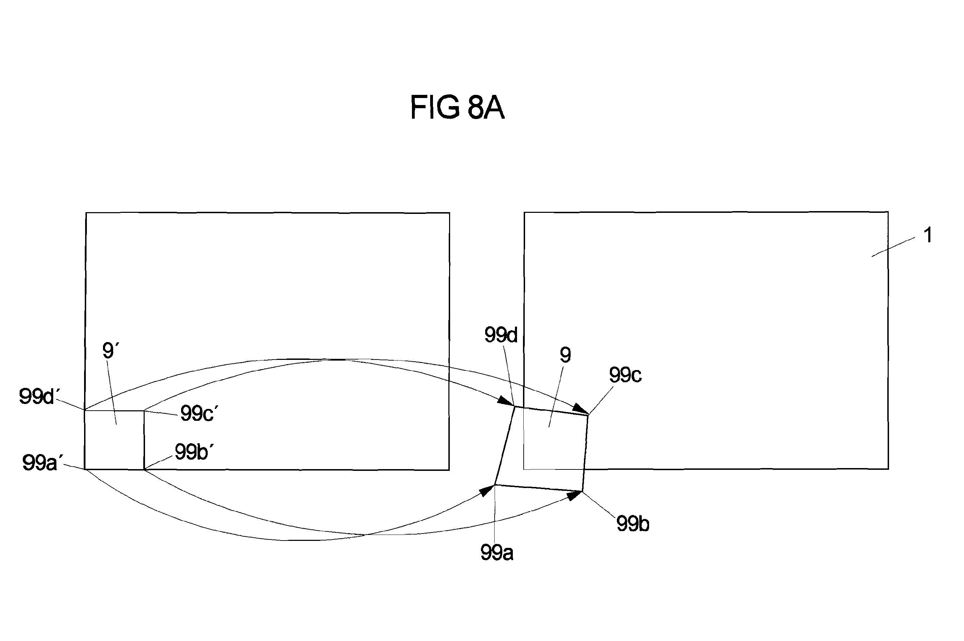

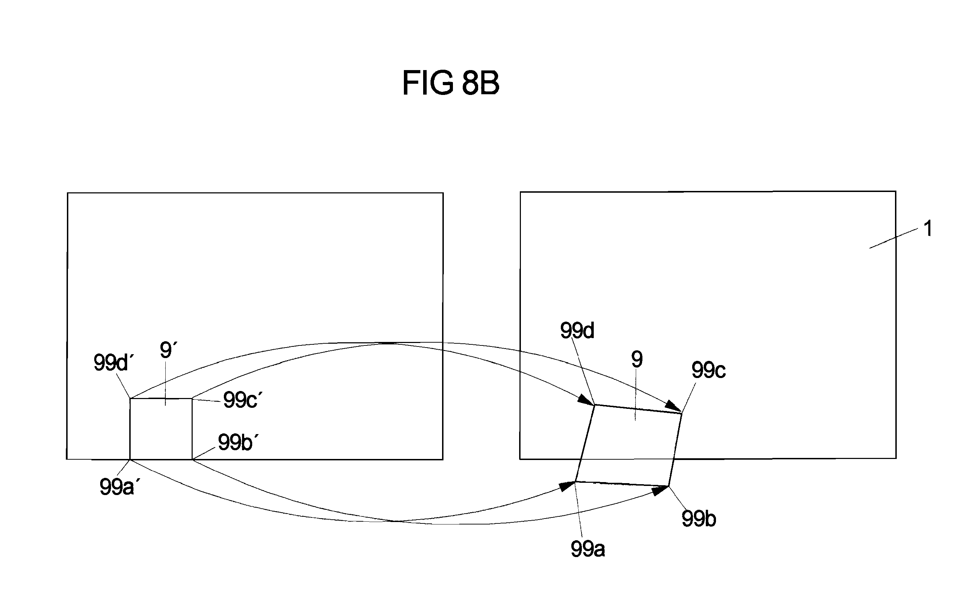

Die Figuren 8A und 8B veranschaulichen den Schritt 1000 der Figur 7. Gemäß Figur 8A wird ein Kalibriermuster in Form eines Gitterpunktrasters 9, 9' projiziert, von dem ein Ausschnitt von vier Gitterpunkten 99a'-d', 99a-d gezeigt ist. Die linke Darstellung der Figur 8A zeigt das Gitterpunktraster 9' in der Gegenstandsebene der Projektion (bzw. in einem Framebuffer des Projektors), während die rechte Darstellung die Projektion 9 des Gitterpunktrasters auf einer Projektionsfläche illustriert. Die Lage der projizierten Gitterpunkte 99a-d wird mittels des oben beschriebenen Verfahrens unter Verwendung des rekonstruierten Verlaufs der Projektionsfläche in Form von uv-Koordinaten bestimmt und eine Abbildungsvorschrift (durch Pfeile angedeutet) zwischen den Koordinaten der Gitterpunkte 99a'-d' im Framebuffer des Projektors und den projizierten Gitterpunkten 99a-d ermittelt. Entsprechend wird für die anderen Gitterpunkte des Kalibriermusters vorgegangen; vgl. Fig. 8B. Das beschriebene Verfahren lässt sich natürlich nicht nur mit rechteckigen Ausschnitten des Gitterpunktrasters, sondern z.B. auch mit dreieckigen Ausschnitten, die durch drei Gitterpunkte begrenzt sind, realisieren.

### Bezugszeichenliste

- 1: Projektionsfläche
- 2: projiziertes Bild
- 3: Projektor
- 4: Kamera
- 5: Kalibrierstruktur
- 5': Abbild der Kalibrierstruktur
- 6: Testmuster
- 9, 9': Kalibriermuster
- 11-14: Seitenrand der Projektionsfläche
- 12, 13, 15-17: Abschnitt der Projektionsfläche
- 21, 22: Seitenrand des projizierten Bildes
- 51: erste Seite der Kalibrierstruktur
- 51': Abbild der ersten Seite der Kalibrierstruktur
- 52: zweite Seite der Kalibrierstruktur
- 52': Abbild der zweiten Seite der Kalibrierstruktur
- 53: dritte Seite der Kalibrierstruktur
- 53': Abbild der dritten Seite der Kalibrierstruktur
- 54: vierte Seite der Kalibrierstruktur
- 54': Abbild der vierten Seite der Kalibrierstruktur
- 61: erste Teststreifen
- 62: zweite Teststreifen
- 71, 72, 73: Stützstrecken
- 81a, 81b, 82a, 82b, 83a, 83b: Hilfsstrahlen
- 91: erste Kalibrierstreifen
- 92: zweite Kalibrierstreifen
- 95, 96: Referenzstreifen
- 99a-d, 99a'-d': Gitterpunkte
- 111, 112: Knick
- 511: Ende der ersten Seite der Kalibrierstruktur
- 521: Ende der zweiten Seite der Kalibrierstruktur
- A-F: Eckpunkte des Abbildes der Kalibrierstruktur
- G: Fluchtpunkt

## Patentansprüche

1. Verfahren zum Erzeugen einer kalibrierten Projektion auf einer Projektionsfläche (1), mit den Schritten:
a) Anordnen und/oder Erzeugen einer dem räumlichen Verlauf der Projektionsfläche (1) folgenden Kalibrierstruktur (5), die eine erste Seite (51) und eine zweite Seite (52), die parallel zu der ersten Seite (51) verläuft, und eine gemessen in Richtung der ersten oder der zweiten Seite (51, 52) konstante Höhe aufweist;
b) Erzeugen eines Abbildes (5') der Kalibrierstruktur (5) in einer Bildebene mittels einer Kamera (4);
c) Rekonstruieren des räumlichen Verlaufes der Projektionsfläche (1) im Bereich der Kalibrierstruktur (5), umfassend die Schritte:
d) Bestimmen mehrerer Paare von Punkten (A-F) des Abbildes (5') der Kalibrierstruktur (5), die jeweils einen ersten Punkt (A, C, E) und einen zweiten Punkt (B, D, F) des Abbildes (5') der Kalibrierstruktur (5) aufweisen, wobei der erste und der zweite Punkt jeweils einem ersten und einem zweiten Punkt der tatsächlichen Kalibrierstruktur (5) entsprechen, die sich entlang der ersten oder der zweiten Seite (51, 52) der Kalibrierstruktur (5) gegenüberliegen;
e) Erzeugen mehrerer Hilfsstrahlpaare, die jeweils zwei Hilfsstrahlen (81 a, 81 b, 82a, 82b, 83a, 83b) aufweisen, die von dem ersten und dem zweiten Punkt (A - F) der Punktepaare zu einem gedachten Fluchtpunkt (G) vor der Bildebene verlaufen;
f) Erzeugen mehrerer zueinander paralleler Stützstrecken (71, 72, 73), die jeweils auf einem der Hilfsstrahlen (81 a, 82a, 83a) eines der Hilfsstrahlpaare beginnen und auf dem jeweils anderen Hilfsstrahl (81 b, 82b, 83b) des Hilfsstrahlpaares enden;
g) Verändern der Länge und/oder der Orientierung der Stützstrecken (71, 72, 73), bis sämtliche Stützstrecken (71, 72, 73) die gleiche Länge aufweisen und jeweils unter dem gleichen Winkel auf eine gemeinsame Ebene aufsetzen;
h) Erzeugen eines Modells der Projektionsfläche (1) unter Verwendung der gemäß Schritt g) gefundenen Stützstrecken, wobei diese Stützstrecken Streckenabschnitte der gesuchten Projektionsfläche sind, die parallel zu der ersten und zweiten Seite (51, 52) der Kalibrierstruktur (5) verlaufen;
i) Erzeugen einer kalibrierten Projektion unter Verwendung des gemäß dem Schritt h) erzeugten Modells der Projektionsfläche.

2. Verfahren nach Anspruch 1, **dadurch gekennzeichnet, dass** vor der Rekonstruktion gemäß den Schritten d) bis h) eine Korrektur eines Linsenfehlers der Kamera (4) erfolgt, wobei Korrekturparameter durch Bestimmen einer Abweichung des Verlaufs einer ersten Seite (51') und/oder einer zweiten Seite (52') des Abbildes (5') der Kalibrierstruktur von dem Verlauf der ersten Seite (51) und/oder der zweiten Seite (52) der tatsächlichen Kalibrierstruktur (5) ermittelt werden.

3. Verfahren nach einem der vorhergehenden Ansprüche, **dadurch gekennzeichnet, dass** gemäß Schritt d)
- ein erstes Punktepaar bestimmt wird, das auf einem ersten Randabschnitt des Abbildes (5') der Kalibrierstruktur liegt, der der ersten Seite (51) der tatsächlichen Kalibrierstruktur (5) entspricht,
- ein zweites Punktepaar bestimmt wird, das auf einem zweiten Randabschnitt des Abbildes (5') der Kalibrierstruktur liegt, der der zweiten Seite (52) der tatsächlichen Kalibrierstruktur (5) entspricht, und
- ein drittes Punktepaar bestimmt wird, dessen Punkte Punkten der tatsächlichen Kalibrierstruktur (5) entsprechen, die sich in einem Bereich der Projektionsfläche (1) befinden, der den größten Abstand zu einer Ebene aufweist, in der die erste und die zweite Seite (51, 52) der Kalibrierstruktur liegen, und
- die Schritte f) bis h) zunächst für das erste, zweite und dritte Punktepaar durchgeführt werden.

4. Verfahren nach einem der vorhergehenden Ansprüche, **dadurch gekennzeichnet, dass** die erste und die zweite Seite (51, 52) der Kalibrierstruktur (5) zumindest teilweise durch einen ersten und einen zweiten Rand (14, 15) der Projektionsfläche (1) gebildet werden.

5. Verfahren nach einem der Ansprüche 1 bis 4, **dadurch gekennzeichnet, dass** die Kalibrierstruktur (5) zumindest teilsweise auf der Projektionsfläche (1) angeordnet oder auf die Projektionsfläche (1) projiziert wird.

6. Verfahren nach einem der vorhergehenden Ansprüche, **dadurch gekennzeichnet, dass** die Projektionsfläche (1) in Bereich der Kalibrierstruktur (5) einen ersten Abschnitt (12) und einen zweiten Abschnitt (13) aufweist, der gegenüber dem ersten Abschnitt (12) abgewinkelt oder abgekrümmt verläuft.

7. Verfahren nach Anspruch 6, **dadurch gekennzeichnet, dass**
- die Projektionsfläche (1) zumindest abschnittsweise als Mantelfläche eines Zylinders oder eines Zylindersegments ausgebildet ist oder wellenförmig verläuft, und/oder
- sich der erste Abschnitt (12) der Projektionsfläche (1) entlang einer ersten Ebene und der zweite Abschnitt (13) der Projektionsfläche entlang einer zweiten Ebene erstreckt, wobei die erste und die zweite Ebene unter einem Winkel zueinander verlaufen.

8. Verfahren nach einem der vorhergehenden Ansprüche, **gekennzeichnet durch** die Schritte:
i) Erzeugen eines transformierten Bildes der Kalibrierstruktur (5) **durch** Transformieren des Abbildes (5') der Kalibrierstruktur (5) aus der Bildebene der Kamera (4) in eine Hilfsebene, derart, dass der Rand des transformierten Bildes der Kalibrierstruktur eine erste und eine zweite Seite aufweist, die parallel zueinander verlaufen;
ii) Auswählen mehrerer Paare von Punkten des transformierten Bildes der Kalibrierstruktur, die jeweils einen ersten und einen zweiten Punkt eines Randes der transformierten Kalibrierstruktur aufweisen, wobei sich der erste und der zweite Punkt jeweils in einer Richtung entlang der ersten oder der zweiten Seite des transformierten Bildes der Kalibrierstruktur gegenüberliegen; und
iii) Auswählen von Punktepaaren gemäß Schritt d) **durch** Identifizieren von Punktepaaren im Abbild der Kalibrierstruktur, die den ausgewählten Punktepaaren des transformierten Bildes der Kalibrierstruktur entsprechen.

9. Verfahren nach Anspruch 8, **dadurch gekennzeichnet, dass** das Identifizieren der Punktepaare gemäß Schritt iii) durch Rücktransformation der Koordinaten der Punkte der ausgewählten Punktepaare des transformierten Bildes in die Bildebene erfolgt.

10. Verfahren nach Anspruch 9, **dadurch gekennzeichnet, dass** das Transformieren des Abbildes der Kalibrierstruktur aus der Bildebene in die Hilfsebene mittels einer Homographiematrix und die Rücktransformation mittels der invertierten Homographiematrix erfolgt.

11. Verfahren nach einem der vorhergehenden Ansprüche, **dadurch gekennzeichnet, dass**
a) mindestens ein Kalibriermuster (6) auf die Projektionsfläche (1) projiziert wird;
b) mit der Kamera (4) ein Abbild des Kalibriermusters (6) erzeugt wird; und
c) anhand des Abbildes des Kalibriermusters (6) und des rekonstruierten Verlaufs der Projektionsfläche im Bereich der Kalibrierstruktur (5) Warping-Parameter zur Kalibrierung der Projektion bestimmt werden.

12. Verfahren zum Erzeugen einer kalibrierten Projektion auf einer Projektionsfläche (1), mit den Schritten:
a) Erzeugen eines Abbildes (5') der Projektionsfläche (1) in einer Bildebene mittels einer Kamera (4);
b) Rekonstruktion des räumlichen Verlaufes der Projektionsfläche (1), umfassend die Schritte:
c) Erzeugen einer Kalibrierstruktur (5') im Abbild der Projektionsfläche (1), die sich derart an charakteristischen Strukturen der Projektionsfläche orientiert, dass sie einem Abbild einer auf der Projektionsfläche angeordneten Kalibrierstruktur (5), entspricht, die eine erste Seite (51) und eine zweite Seite (52), die parallel zu der ersten Seite (51) verläuft, und eine gemessen in Richtung der ersten oder der zweiten Seite (51, 52) konstante Höhe aufweist;
d) Bestimmen mehrerer Paare von Punkten (A-F) der erzeugten Kalibrierstruktur (5'), die jeweils einen ersten Punkt (A, C, E) und einen zweiten Punkt (B, D, F) der Kalibrierstruktur (5') aufweisen, die Punkten einer auf der Projektionsfläche angeordneten Kalibrierstruktur (5) entsprechen, die sich entlang der ersten oder der zweiten Seite (51, 52) der Kalibrierstruktur (5) gegenüberliegen;
e) Erzeugen mehrerer Hilfsstrahlpaare, die jeweils zwei Hilfsstrahlen (81 a, 81 b, 82a, 82b, 83a, 83b) aufweisen, die von dem ersten und dem zweiten Punkt (A - F) der Punktepaare zu einem gedachten Fluchtpunkt (G) vor der Bildebene verlaufen;
f) Erzeugen mehrerer zueinander paralleler Stützstrecken (71, 72, 73), die jeweils auf einem der Hilfsstrahlen (81 a, 82a, 83a) eines der Hilfsstrahlpaare beginnen und auf dem jeweils anderen Hilfsstrahl (81b, 82b, 83b) des Hilfsstrahlpaares enden;
g) Verändern der Länge und/oder der Orientierung der Stützstrecken (71, 72, 73), bis sämtliche Stützstrecken (71, 72, 73) die gleiche Länge aufweisen und jeweils unter dem gleichen Winkel auf eine gemeinsame Ebene aufsetzen;
h) Erzeugen eines Modells der Projektionsfläche (1) unter Verwendung der gemäß Schritt g) gefundenen Stützstrecken, wobei diese Stützstrecken Streckenabschnitte der gesuchten Projektionsfläche sind, die parallel zu der ersten und zweiten Seite (51, 52) der Kalibrierstruktur (5) verlaufen;
i) Erzeugen einer kalibrierten Projektion unter Verwendung des gemäß dem Schritt h) erzeugten Modells der Projektionsfläche.

13. Verfahren nach Anspruch 12, **dadurch gekennzeichnet, dass** die Kalibrierstruktur (5) dadurch erzeugt wird, dass sie über eine Bildverarbeitungssoftware dem Abbild der Projektionsfläche (1) hinzugefügt wird.

14. Vorrichtung zum Erzeugen einer kalibrierten Projektion auf einer Projektionsfläche (1), insbesondere zum Durchführen des Verfahrens gemäß einem der Ansprüche 1 bis 11, mit
a) Rekonstruktionsmitteln zur Rekonstruktion des räumlichen Verlaufes der Projektionsfläche (1), wobei die Rekonstruktionsmittel
b) eine dem Verlauf der Projektionsfläche folgende Kalibrierstruktur (5) und/oder Mittel zum Erzeugen einer Kalibrierstruktur (5) auf der Projektionsfläche aufweisen, wobei die Kalibrierstruktur (5) eine erste Seite und eine zweite Seite (51, 52), die parallel zu der ersten Seite verläuft, und eine gemessen in Richtung der ersten oder der zweiten Seite (51, 52) konstante Höhe besitzt, aufweisen und ausgehend von einem Abbild der Kalibrierstruktur (5) dazu ausgebildet sind,
c) mehrere Paare von Punkten (A-F) des Abbildes (5') der Kalibrierstruktur zu bestimmen, die jeweils einen ersten Punkt (A, C, E) und einen zweiten Punkt (B, D, F) des Abbildes (5') der Kalibrierstruktur aufweisen, wobei der erste und der zweite Punkt jeweils einem ersten und einem zweiten Punkt der tatsächlichen Kalibrierstruktur (5) entsprechen, die sich entlang der ersten oder der zweiten Seite (51, 52) der Kalibrierstruktur gegenüberliegen;
d) mehrere Hilfsstrahlpaare zu erzeugen, die jeweils zwei Hilfsstrahlen (81 a, 81 b, 82a, 82b, 83a, 83b) aufweisen, die von dem ersten und dem zweiten Punkt (A-F) der Punktepaare zu einem gedachten Fluchtpunkt (G) vor der Bildebene verlaufen,
e) mehrere Stützstrecken (71, 72, 73) zu erzeugen, die jeweils auf einem der Hilfsstrahlen (81 a, 82a, 83a) eines der Hilfsstrahlpaare beginnen und auf dem jeweils anderen Hilfsstrahl (81b, 82b, 83b) des Hilfsstrahlpaares enden,
f) die Länge und/oder die Orientierung der Stützstrecken (71, 72, 73) zu verändern, bis sämtliche Stützstrecken die gleiche Länge aufweisen und jeweils unter dem gleichen Winkel auf eine gemeinsame Ebene aufsetzen,
g) ein Modell der Projektionsfläche unter Verwendung der gemäß Schritt f) gefundenen Stützstrecken zu erzeugen, wobei diese Stützstrecken Streckenabschnitte der gesuchten Projektionsfläche sind, die parallel zu der ersten und zweiten Seite der Kalibrierstruktur verlaufen; und
h) Kalibrierungsmitteln zum Erzeugen einer kalibrierten Projektion unter Verwendung eines durch die Rekonstruktionsmittel rekonstruierten räumlichen Verlaufes der Projektionsfläche.

15. Vorrichtung zum Erzeugen einer kalibrierten Projektion auf einer Projektionsfläche (1), insbesondere zum Durchführen des Verfahrens gemäß Anspruch 12 oder 13, mit
a) Rekonstruktionsmitteln zur Rekonstruktion des räumlichen Verlaufes der Projektionsfläche (1), wobei die Rekonstruktionsmittel
b) Mittel zum Erzeugen einer Kalibrierstruktur (5') in einem Abbild der Projektionsfläche aufweisen, wobei die Kalibrierstruktur (5) sich derart an charakteristischen Strukturen der Projektionsfläche orientiert, dass sie einem Abbild einer auf der Projektionsfläche angeordneten Kalibrierstruktur (5), entspricht, die eine erste Seite und eine zweite Seite (51, 52), die parallel zu der ersten Seite verläuft, und eine gemessen in Richtung der ersten oder der zweiten Seite (51, 52) konstante Höhe besitzt, und wobei die Rekonstruktionsmittel dazu ausgebildet sind,
c) mehrere Paare von Punkten der Kalibrierstruktur (5') zu bestimmen, die jeweils einen ersten Punkt (A, C, E) und einen zweiten Punkt (B, D, F) der Kalibrierstruktur (5') aufweisen, die Punkten einer auf der Projektionsfläche angeordneten Kalibrierstruktur (5) entsprechen, die sich entlang der ersten oder der zweiten Seite (51, 52) der Kalibrierstruktur gegenüberliegen;
d) mehrere Hilfsstrahlpaare zu erzeugen, die jeweils zwei Hilfsstrahlen (81 a, 81 b, 82a, 82b, 83a, 83b) aufweisen, die von dem ersten und dem zweiten Punkt (A-F) der Punktepaare zu einem gedachten Fluchtpunkt (G) vor der Bildebene verlaufen,
e) mehrere Stützstrecken (71, 72, 73) zu erzeugen, die jeweils auf einem der Hilfsstrahlen (81 a, 82a, 83a) eines der Hilfsstrahlpaare beginnen und auf dem jeweils anderen Hilfsstrahl (81b, 82b, 83b) des Hilfsstrahlpaares enden,
f) die Länge und/oder die Orientierung der Stützstrecken (71, 72, 73) zu verändern, bis sämtliche Stützstrecken die gleiche Länge aufweisen und jeweils unter dem gleichen Winkel auf eine gemeinsame Ebene aufsetzen,
g) ein Modell der Projektionsfläche unter Verwendung der gemäß Schritt f) gefundenen Stützstrecken zu erzeugen, wobei diese Stützstrecken Streckenabschnitte der gesuchten Projektionsfläche sind, die parallel zu der ersten und zweiten Seite der Kalibrierstruktur verlaufen; und
h) Kalibrierungsmitteln zum Erzeugen einer kalibrierten Projektion unter Verwendung eines durch die Rekonstruktionsmittel rekonstruierten räumlichen Verlaufes der Projektionsfläche.

## Claims

1. A method for generating a calibrated projection on a projection surface (1), with the steps:
a) arranging and/or generating a calibrating structure (5) following the spatial extension of the projection surface (1), which has a first side (51) and a second side (52), which extends parallel to the first side (51), and has a constant height as measured in direction of the first or the second side (51, 52);
b) generating an image (5') of the calibrating structure (5) in an image plane by means of a camera (4);
c) reconstructing the spatial extension of the projection surface (1) in the region of the calibrating structure (5), comprising the steps:
d) determining a plurality of pairs of points (A-F) of the image (5') of the calibrating structure (5), which each include a first point (A, C, E) and a second point (B, D, F) of the image (5') of the calibrating structure (5), wherein the first and the second point each correspond to a first and a second point of the actual calibrating structure (5), which are located opposite to each other along the first or the second side (51, 52) of the calibrating structure (5);
e) generating a plurality of auxiliary beam pairs which each include two auxiliary beams (81 a, 81b, 82a, 82b, 83a, 83b), which extend from the first and the second point (A-F) of the pairs of points to an imaginary vanishing point (G) before the image plane;
f) generating a plurality of supporting paths (71, 72, 73) parallel to each other, which each begin on one of the auxiliary beams (81 a, 82a, 83a) of one of the auxiliary beam pairs and end on the respective other auxiliary beam (81 b, 82b, 83b) of the auxiliary beam pair;
g) varying the length and/or the orientation of the supporting paths (71, 72, 73), until all supporting paths (71, 72, 73) have the same length and each impinge on a common plane under the same angle;
h) generating a model of the projection surface (1) by using the supporting paths found according to step g), wherein these supporting paths are path sections of the sought projection surface, which extend parallel to the first and second side (51, 52) of the calibrating structure (5);
i) generating a calibrated projection by using the model of the projection surface generated according to step h).

2. The method according to claim 1, **characterized in that** before the reconstruction according to steps d) to h) a correction of a lens aberration of the camera (4) is made, wherein correction parameters are determined by determining a deviation of the extension of a first side (51') and/or a second side (52') of the image (5') of the calibrating structure from the extension of the first side (51) and/or the second side (52) of the actual calibrating structure (5).

3. The method according to any of the preceding claims, **characterized in that** according to step d)
- a first pair of points is determined, which lies on a first edge portion of the image (5') of the calibrating structure, which corresponds to the first side (51) of the actual calibrating structure (5),
- a second pair of points is determined, which lies on a second edge portion of the image (5') of the calibrating structure, which corresponds to the second side (52) of the actual calibrating structure (5), and
- a third pair of points is determined, whose points correspond to points of the actual calibrating structure (5), which are located in a region of the projection surface (1) which has the greatest distance to a plane in which the first and the second side (51, 52) of the calibrating structure lie, and
- the steps f) to h) initially are carried out for the first, second and third pair of points.

4. The method according to any of the preceding claims, **characterized in that** the first and the second side (51, 52) of the calibrating structure (5) are at least partly formed by a first and a second edge (14, 15) of the projection surface (1).

5. The method according to any of claims 1 to 4, **characterized in that** the calibrating structure (5) is at least partly arranged on the projection surface (1) or projected onto the projection surface (1).

6. The method according to any of the preceding claims, **characterized in that** in the region of the calibrating structure (5) the projection surface (1) includes a first portion (12) and a second portion (13) which extends angled or curved with respect to the first portion (12).

7. The method according to claim 6, **characterized in that**
- the projection surface (1) is at least partly formed as lateral surface of a cylinder or a cylinder segment or extends in a wave-like manner, and/or
- the first portion (12) of the projection surface (1) extends along a first plane and the second portion (13) of the projection surface extends along a second plane, wherein the first and the second plane extend at an angle to each other.

8. The method according to any of the preceding claims, **characterized by** the steps:
i) generating a transformed image of the calibrating structure (5) by transforming the image (5') of the calibrating structure (5) from the image plane of the camera (4) into an auxiliary plane such that the edge of the transformed image of the calibrating structure has a first and a second side, which extend parallel to each other;
ii) selecting a plurality of pairs of points of the transformed image of the calibrating structure, which each include a first and a second point of an edge of the transformed calibrating structure, wherein the first and the second point each are located opposite each other in a direction along the first or the second side of the transformed image of the calibrating structure; and
iii) selecting pairs of points according to step d) by identifying pairs of points in the image of the calibrating structure, which correspond to the selected pairs of points of the transformed image of the calibrating structure.

9. The method according to claim 8, **characterized in that** identifying the pairs of points according to step iii) is effected by back-transformation of the coordinates of the points of the selected pairs of points of the transformed image into the image plane.

10. The method according to claim 9, **characterized in that** transforming the image of the calibrating structure from the image plane into the auxiliary plane is effected by means of a homography matrix and the back-transformation is effected by means of the inverted homography matrix.

11. The method according to any of the preceding claims, **characterized in that**
a) at least one calibration pattern (6) is projected onto the projection surface (1);
b) an image of the calibration pattern (6) is generated with the camera (4); and
c) with reference to the image of the calibration pattern (6) and the reconstructed extension of the projection surface in the region of the calibrating structure (5) warping parameters are determined for calibrating the projection.

12. A method for generating a calibrated projection on a projection surface (1), with the steps:
a) generating an image (5') of the projection surface (1) in an image plane by means of a camera (4);
b) reconstructing the spatial extension of the projection surface (1), comprising the steps:
c) generating a calibrating structure (5') in the image of the projection surface (1), which is geared to characteristic structures of the projection surface such that it corresponds to an image of a calibrating structure (5) arranged on the projection surface, which has a first side (51) and a second side (52), which extends parallel to the first side (52), and has a constant height as measured in direction of the first or the second side (51, 52);
d) determining a plurality of pairs of points (A-F) of the generated calibrating structure (5'), which each include a first point (A, C, E) and a second point (B, D, F) of the calibrating structure (5'), which correspond to points of a calibrating structure (5) arranged on the projection surface, which are located opposite to each other along the first or the second side (51, 52) of the calibrating structure (5);
e) generating a plurality of auxiliary beam pairs which each include two auxiliary beams (81 a, 81 b, 82a, 82b, 83a, 83b), which extend from the first and the second point (A-F) of the pairs of points to an imaginary vanishing point (G) before the image plane;
f) generating a plurality of supporting paths (71, 72, 73) parallel to each other, which each begin on one of the auxiliary beams (81 a, 82a, 83a) of one of the auxiliary beam pairs and end on the respective other auxiliary beam (81 b, 82b, 83b) of the auxiliary beam pair;
g) varying the length and/or the orientation of the supporting paths (71, 72, 73), until all supporting paths (71, 72, 73) have the same length and each impinge on a common plane under the same angle;
h) generating a model of the projection surface (1) by using the supporting paths found according to step g), wherein these supporting paths are path sections of the sought projection surface, which extend parallel to the first and second side (51, 52) of the calibrating structure (5);
i) generating a calibrated projection by using the model of the projection surface generated according to step h).

13. The method according to claim 12, **characterized in that** the calibrating structure (5) is generated by being added to the image of the projection surface (1) by means of an image processing software.

14. An apparatus for generating a calibrated projection on a projection surface (1), in particular for carrying out the method according to any of claims 1 to 11, comprising
a) reconstruction means for reconstructing the spatial extension of the projection surface (1), wherein the reconstruction means
b) include a calibrating structure (5) following the extension of the projection surface and/or means for generating a calibrating structure (5) on the projection surface, wherein the calibrating structure (5) has a first side and a second side (51, 52), which extends parallel to the first side, and a constant height as measured in direction of the first or the second side (51, 52), and starting from an image of the calibrating structure (5) are formed to
c) determine a plurality of pairs of points (A-F) of the image (5') of the calibrating structure, which each include a first point (A, C, E) and a second point (B, D, F) of the image (5') of the calibrating structure, wherein the first and the second point each correspond to a first and a second point of the actual calibrating structure (5), which are located opposite to each other along the first or the second side (51, 52) of the calibrating structure;
d) generate a plurality of auxiliary beam pairs which each include two auxiliary beams (81 a, 81 b, 82a, 82b, 83a, 83b), which extend from the first and the second point (A-F) of the pairs of points to an imaginary vanishing point (G) before the image plane;
e) generate a plurality of supporting paths (71, 72, 73), which each begin on one of the auxiliary beams (81a, 82a, 83a) of one of the auxiliary beam pairs and end on the respective other auxiliary beam (81 b, 82b, 83b) of the auxiliary beam pair;
f) vary the length and/or the orientation of the supporting paths (71, 72, 73), until all supporting paths have the same length and each impinge on a common plane under the same angle;
g) generate a model of the projection surface by using the supporting paths found according to step f), wherein these supporting paths are path sections of the sought projection surface, which extend parallel to the first and second side of the calibrating structure; and
h) calibrating means for generating a calibrated projection by using a spatial extension of the projection surface reconstructed by the reconstruction means.

15. An apparatus for generating a calibrated projection on a projection surface (1), in particular for carrying out the method according to claim 12 or 13, comprising
a) reconstruction means for reconstructing the spatial extension of the projection surface (1), wherein the reconstruction means
b) include means for generating a calibrating structure (5') in an image of the projection surface, wherein the calibrating structure (5) is geared to characteristic structures of the projection surface such that it corresponds to an image of a calibrating structure (5) arranged on the projection surface, which has a first side and a second side (51, 52), which extends parallel to the first side, and has a constant height as measured in direction of the first or the second side (51, 52), and wherein the reconstruction means are formed to
c) determine a plurality of pairs of points of the calibrating structure (5'), which each include a first point (A, C, E) and a second point (B, D, F) of the calibrating structure (5'), which correspond to points of a calibrating structure (5) arranged on the projection surface, which are located opposite to each other along the first or the second side (51, 52) of the calibrating structure;
d) generate a plurality of auxiliary beam pairs which each include two auxiliary beams (81 a, 81b, 82a, 82b, 83a, 83b), which extend from the first and the second point (A-F) of the pairs of points to an imaginary vanishing point (G) before the image plane;
e) generate a plurality of supporting paths (71, 72, 73) which each begin on one of the auxiliary beams (81 a, 82a, 83a) of one of the auxiliary beam pairs and end on the respective other auxiliary beam (81 b, 82b, 83b) of the auxiliary beam pair;
f) vary the length and/or the orientation of the supporting paths (71, 72, 73), until all supporting paths have the same length and each impinge on a common plane under the same angle;
g) generate a model of the projection surface by using the supporting paths found according to step f), wherein these supporting paths are path sections of the sought projection surface, which extend parallel to the first and second side of the calibrating structure; and
h) calibrating means for generating a calibrated projection by using a spatial extension of the projection surface reconstructed by the reconstruction means.

## Revendications

1. Procédé destiné à générer une projection étalonnée sur une surface de projection (1), comportant les étapes consistant à :
a) disposer et/ou générer une structure d'étalonnage (5) suivant le profil spatial de la surface de projection (1), laquelle structure présente une première côté (51) et une deuxième côté (52) qui s'étend parallèlement à la première côté (51), et une hauteur constante, mesurée dans la direction de la première ou de la deuxième côté (51, 52) ;
b) générer une image (5') de la structure d'étalonnage (5) sur un plan image au moyen d'une caméra (4) ;
c) reconstruire le profil spatial de la surface de projection (1) dans la région de la structure d'étalonnage (5), cela comprenant les étapes consistant à :
d) déterminer plusieurs paires de points (A-F) de l'image (5') de la structure d'étalonnage (5), lesquels points comprennent respectivement un premier point (A, C, E) et un deuxième point (B, D, F) de l'image (5') de la structure d'étalonnage (5), les premier et deuxième points correspondant respectivement à des premier et deuxième points de la structure d'étalonnage (5) effective, lesquels points sont opposés les uns aux autres le long des première ou deuxième côtés (51, 52) de la structure d'étalonnage (5);
e) générer une pluralité de paires de rayons auxiliaires comportant respectivement deux rayons auxiliaires (81a, 81b, 82a, 82b, 83a, 83b) qui se propagent des premier et deuxième points (A-F) des paires de points vers un point de fuite imaginaire (G) situé à l'avant du plan image ;
f) générer une pluralité de sections de support parallèles les unes aux autres (71, 72, 73) qui commencent respectivement sur l'un des rayons auxiliaires (81a, 82a, 83a) d'une paire de rayons auxiliaires et se terminent respectivement sur l'autre rayon auxiliaire (81b, 82b, 83b) de la paire de rayons auxiliaires ;
g) modifier la longueur et/ou l'orientation des sections de support (71, 72, 73) jusqu'à ce que la totalité des sections de support (71, 72, 73) présentent la même longueur et jusqu'à ce qu'elles atteignent respectivement un plan commun sous le même angle ;
h) générer un modèle de la surface de projection (1) en utilisant les sections de support trouvées conformément à l'étape g), lesdites sections du support étant des tronçons de la surface de projection recherchée qui s'étendent parallèlement aux première et deuxième côtés (51, 52) de la structure d'étalonnage (5) ;
i) générer une projection étalonnée en utilisant le modèle de la surface de projection ayant été généré conformément à l'étape h).

2. Procédé selon la revendication 1, **caractérisé en ce qu**'avant la reconstruction effectuée conformément aux étapes d) à h), on effectue une correction d'une aberration de la caméra (4), un paramètre de correction étant estimé en déterminant un écart du profil d'une première côté (51') et/ou d'une deuxième côté (52') de l'image (5') de la structure d'étalonnage par rapport au profil de la première côté (51) et/ou de la deuxième côté (52) de la structure d'étalonnage (5) effective.

3. Procédé selon l'une quelconque des revendications précédentes, **caractérisé en ce que,** conformément à l'étape d),
- on détermine une première paire de points qui se situe sur une première partie de bord de l'image (5') de la structure d'étalonnage, laquelle première partie de bord correspond à la première côté (51) de la structure d'étalonnage (5) effective,
- on détermine une deuxième paire de points qui se situe sur une deuxième partie de bord de l'image (5') de la structure d'étalonnage, laquelle deuxième partie de bord correspond à la deuxième côté (52) de la structure d'étalonnage effective (5), et
- on détermine une troisième paire de points dont les points correspondent à des points de la structure d'étalonnage (5) effective, lesquels points se trouvent dans une zone de la surface de projection (1) qui présente la plus grande distance par rapport à un plan dans lequel se situent les première et deuxième côtés (51, 52) de la structure d'étalonnage, et
- on effectue les étapes f) à h) en premier lieu pour les première, deuxième et troisième paires de points.

4. Procédé selon l'une quelconque des : revendications précédentes, **caractérisé en ce que** les première et deuxième côtés (51, 52) de la structure d'étalonnage (5) sont au moins partiellement formées par des premier et deuxième bords (14, 15) de la surface de projection (1).

5. Procédé selon l'une quelconque des revendications 1 à 4, **caractérisé en ce que** la structure d'étalonnage (5) est au moins partiellement disposée sur la surface de projection (1) ou est projetée sur la surface de projection (1).

6. Procédé selon l'une quelconque des revendications précédentes, **caractérisé en ce que** la surface de projection (1) présente, dans la région de la structure d'étalonnage (5), une première partie (12) et une deuxième partie (13) qui s'étend de manière coudée ou incurvée par rapport à la première partie (12).

7. Procédé selon la revendication 6, **caractérisé en ce que**
- la surface de projection (1) est au moins réalisée par sections sous la forme d'une enveloppe d'un cylindre ou d'un segment de cylindre ou s'étend de manière ondulée, et/ou
- la première partie (12) de la surface de projection (1) s'étend le long d'un premier plan et la deuxième partie (13) de la surface de projection s'étend le long d'un deuxième plan, les premier et deuxième plans formant entre eux un certain angle.

8. Procédé selon l'une quelconque des revendications précédentes, **caractérisé par** les étapes consistant à :
i) générer une image transformée de la structure d'étalonnage (5) par transformation de l'image (5') de la structure d'étalonnage (5) depuis le plan image de la caméra (4) vers un plan auxiliaire de manière à ce que le bord de l'image transformée de la structure d'étalonnage présente des première et deuxième côtés qui s'étendent parallèlement l'une à l'autre ;
ii) sélectionner une pluralité de paires de points de l'image transformée de la structure d'étalonnage qui comportent respectivement des premier et deuxième points d'un bord de la structure d'étalonnage transformée, les premier et deuxième points étant respectivement opposés l'un à l'autre le long de la première ou de la deuxième côté de l'image transformée de la structure d'étalonnage ; et
iii) sélectionner des paires de points conformément à l'étape d) en identifiant dans la structure d'étalonnage des points qui correspondent aux paires de points sélectionnées de l'image transformée de la structure d'étalonnage.

9. Procédé selon la revendication 8, **caractérisé en ce que** l'identification de la paire de points conformément à l'étape iii) s'effectue par transformation inverse des coordonnées des points de la paire de points sélectionnée de l'image transformée dans le plan image.

10. Procédé selon la revendication 9, **caractérisé en ce que** la transformation de l'image de la structure d'étalonnage depuis le plan image vers le plan auxiliaire s'effectue au moyen d'une matrice d'homographie et d'une transformation inverse au moyen de la matrice d'homographie inversée.

11. Procédé selon l'une quelconque des revendications précédentes, **caractérisé en ce que**
a) au moins un motif d'étalonnage (6) est projeté sur la surface de projection (1);
b) une image du motif d'étalonnage (6) est générée au moyen de la caméra (4) ; et
c) des paramètres de gauchissement sont déterminés pour étalonner la projection sur la base de l'image du motif d'étalonnage (6) et du profil reconstruit de la surface de projection dans la région de la structure d'étalonnage (5).

12. Procédé destiné à générer une projection étalonnée sur une surface de projection (1), comportant les étapes consistant à :
a) générer une image (5') de la surface de projection (1) dans un plan image au moyen d'une caméra (4) ;
b) reconstruire le profil spatial de la surface de projection (1), cela comprenant les étapes consistant à :
c) générer dans l'image de la surface de projection (1) une structure d'étalonnage (5') qui s'oriente sur des structures caractéristiques de la surface de projection de manière à ce qu'elle corresponde à une image d'une structure d'étalonnage (5) disposée sur la surface de projection, laquelle image présente un premier côté (51) et une deuxième côté (52) qui s'étend parallèlement à la première côté (51), et présente une hauteur constante, mesurée dans la direction de la première ou de la deuxième côté (51, 52) ;
d) déterminer une pluralité de paires de points (A-F) de la structure d'étalonnage (5'), lesquelles paires de points comportent un premier point (A, C, E) et un deuxième point (B, D, F) de la structure d'étalonnage (5'), lesquels points correspondent à des points d'une structure d'étalonnage (5) disposée sur la surface de projection qui sont opposés l'un à l'autre le long de la première ou de la deuxième côté (51, 52) de la structure d'étalonnage (5) ;
e) générer une pluralité de paires de rayons auxiliaires comportant respectivement deux rayons auxiliaires (81a, 81b, 82a, 82b, 83a, 83b) qui se propagent depuis les premier et deuxième points (A-F) des paires de points vers un point de fuite imaginaire (G) situé à l'avant du plan image ;
f) générer une pluralité de sections de support parallèles les unes aux autres (71, 72, 73) qui commencent respectivement sur l'un des rayons auxiliaires (81a, 82a, 83a) de l'une des paires de rayons auxiliaires et se terminent respectivement sur l'autre rayon auxiliaire (81b, 82b, 83b) de la paire de rayons auxiliaires ;
g) modifier la longueur et/ou l'orientation des sections de support (71, 72, 73) jusqu'à ce que la totalité des sections de support (71, 72, 73) présentent la même longueur et jusqu'à ce qu'elles atteignent respectivement un plan commun sous le même angle ;
h) générer un modèle de la surface de projection (1) en utilisant les sections de support trouvés conformément à l'étape g), lesdits trajets du support étant des tronçons des surfaces de projection recherchées, qui s'étendent parallèlement aux première et deuxième côtés (51, 52) de la structure d'étalonnage (5) ;
i) générer une projection étalonnée en utilisant le modèle de la surface de projection ayant été généré conformément à l'étape h).

13. Procédé selon la revendication 12, **caractérisé en ce que** la structure d'étalonnage (5) est générée de manière à ce qu'elle soit ajoutée au moyen d'un logiciel de traitement d'image à l'image de la surface de projection (1).

14. Dispositif destiné à générer une projection étalonnée sur une surface de projection (1), notamment destiné à exécuter le procédé selon l'une quelconque des revendications 1 à 11, comprenant :
a) des moyens de reconstruction destinés à reconstruire le profil spatial de la surface de projection, (1), les moyens de reconstruction
b) comprennent une structure d'étalonnage (5) qui suit le profil de la surface de projection et/ou des moyens destinés à générer une structure d'étalonnage (5) sur la surface de projection, la structure d'étalonnage (5) présentant une première côté et une deuxième côté (51, 52) qui s'étend parallèlement à la première côté et possède une hauteur constante, mesurée dans la direction de la première ou de la deuxième côté (51, 52) et elles sont conçues, à partir d'une image de la structure d'étalonnage (5)
c) pour déterminer une pluralité de paires de points (A-F) de l'image (5') de la structure d'étalonnage, lesquels points comportent respectivement un premier point (A, C, E) et un deuxième point (B, D, F) de l'image (5') de la structure d'étalonnage, les premier et deuxième points correspondant respectivement à des premier et deuxième points de la structure d'étalonnage (5) effective qui sont opposés les uns aux autres le long du premier ou du deuxième côté (51, 52) de la structure d'étalonnage ;
d) pour générer une pluralité de paires de rayons auxiliaires comportant respectivement deux rayons auxiliaires (81a, 81b, 82a, 82b, 83a, 83b) qui se propagent des premier et deuxième points (A-F) des paires de points vers un point de fuite imaginaire (G) situé à l'avant du plan image,
e) pour générer une pluralité de sections de support (71, 72, 73) qui commencent respectivement sur l'un des rayons auxiliaires (81a, 82a, 83a) d'une paire de rayons auxiliaires et se terminent respectivement sur l'autre rayon auxiliaire (81b, 82b, 83b) de la paire de rayons auxiliaires ;
f) pour modifier la longueur et/ou l'orientation des sections de support (71, 72, 73) jusqu'à ce que la totalité des sections de support présentent la même longueur et atteignent respectivement un plan commun sous le même angle,
g) pour générer un modèle de la surface de projection en utilisant les sections de support trouvées conformément à l'étape f), lesdites sections de support étant des sections de trajet de la surface de projection recherchée qui s'étendent parallèlement aux première et deuxième côtés de la structure d'étalonnage ; et
h) des moyens d'étalonnage destinés à générer une projection étalonnée en utilisant un profil spatial de la surface de projection ayant été reconstruit à l'aide des moyens de reconstruction.

15. Dispositif destiné à générer une projection étalonnée sur une surface de projection (1), notamment par exécution du procédé selon la revendication 12 ou 13, comprenant :
a) des moyens de reconstruction destinés à reconstruire le profil spatial de la surface de projection (1), les moyens de reconstruction
b) comprennent des moyens destinés à générer dans une image de la surface de projection une structure d'étalonnage (5'), la structure d'étalonnage (5) s'orientant sur des structures caractéristiques de la surface de projection de manière à ce qu'elle corresponde à une image d'une structure d'étalonnage (5) disposée sur la surface de projection, laquelle structure d'étalonnage possède une première côté et une deuxième côté (51, 52) qui s'étend parallèlement à la première côté, et possède une hauteur constante, mesurée dans la direction de la première ou de la deuxième côté (51, 52), et les moyens de reconstruction sont conçus
c) pour déterminer une pluralité de paire de points de la structure d'étalonnage (5'), lesquels points comportent respectivement un premier point (A, C, E) et un deuxième point (B, D, F) de la structure d'étalonnage (5'), lesquels points correspondent à des points d'une structure d'étalonnage (5) disposée sur la surface de projection, lesquels points sont opposés les uns aux autres le long de la première ou de la deuxième côté (51, 52) de la structure d'étalonnage ;
d) pour générer une pluralité de paires de rayons auxiliaires comportant respectivement deux rayons auxiliaires (81a, 81b, 82a, 82b, 83a, 83b) qui se propagent des premier et deuxième points (A-F) des paires de points vers un point de fuite imaginaire (G) situé à l'avant du plan image,
e) pour générer une pluralité de sections de support (71, 72, 73), qui commencent respectivement sur l'un des rayons auxiliaires (81a, 82a, 83a) de l'une des paires de rayons auxiliaires et se terminent respectivement sur l'autre rayon auxiliaire (81b, 82b, 83b) de la paire de rayons auxiliaires,
f) pour modifier la longueur et/ou l'orientation des sections de support (71, 72, 73) jusqu'à ce que la totalité des sections de support présentent la même longueur et atteignent respectivement un plan commun sous le même angle,
g) pour générer un modèle de la surface de projection en utilisant les sections de support trouvés conformément à l'étape f), lesdits sections de support étant des tronçons de la surface de projection recherchée qui s'étendent parallèlement aux premier et deuxième côtés de la structure d'étalonnage ; et
h) des moyens d'étalonnage destinés à générer une projection étalonnée en utilisant un profil spatial de la surface de projection ayant été reconstruit à l'aide des moyens de reconstruction.
